# EUROPEAN PATENT SPECIFICATION

(11) **EP 0 984 446 B1**
(45) Date of publication and mention of the grant of the patent: **28.07.2004**
(21) Application number: 98917761.3
(22) Date of filing: 01.05.1998
(51) Int. Cl.: G11B 17/04, G11B 23/00

(54) **DISC LOADING APPARATUS AND ADAPTER FOR DISCS**
PLATTENLADEVORRICHTUNG UND ADAPTER FÜR PLATTEN
APPAREIL DE CHARGEMENT DE DISQUES ET ADAPTATEUR POUR DISQUES

(30) Priority: 08.05.1997 JP 11786697
(43) Date of publication of application: 08.03.2000
(73) Proprietor: MATSUSHITA ELECTRIC INDUSTRIAL CO., LTD., Kadoma-shi, Osaka 571-8501 (JP)
(72) Inventor: KUROZUKA, Akira, Fujiidera-shi, Osaka 583-0033 (JP); HANAKAWA, Eiichi, Soraku-gun, Kyoto 619-0223 (JP); MAEDA, Shinichi, Daito-shi, Osaka 574-0034 (JP); EZAWA, Kohzoh, Katano-shi, Osaka 576-0054 (JP)
(74) Representative: Kügele, Bernhard
(86) International application number: PCT/JP1998/002005
(87) International publication number: WO 1998/050918

(56) References cited:
- EP-A- 0 764 947
- JP-A- 3 250 447
- JP-A- 4 061 061
- JP-A- 6 325 457
- JP-A- 7 161 112
- JP-A- 8 147 841
- JP-A- 8 335 352
- US-A- 5 737 293
- PATENT ABSTRACTS OF JAPAN vol. 017, no. 235 (P-1533), 12 May 1993 (1993-05-12) -& JP 04 362562 A (SONY CORP), 15 December 1992 (1992-12-15)
- PATENT ABSTRACTS OF JAPAN vol. 015, no. 503 (P-1290), 19 December 1991 (1991-12-19) -& JP 03 216856 A (SONY CORP), 24 September 1991 (1991-09-24)
- PATENT ABSTRACTS OF JAPAN vol. 1996, no. 05, 31 May 1996 (1996-05-31) -& JP 08 007429 A (YAMAHA CORP), 12 January 1996 (1996-01-12) -& US 5 724 332 A (OGUSU MIKIO) 3 March 1998 (1998-03-03)
- PATENT ABSTRACTS OF JAPAN vol. 1998, no. 01, 30 January 1998 (1998-01-30) -& JP 09 245407 A (MATSUSHITA ELECTRIC IND CO LTD), 19 September 1997 (1997-09-19)
- PATENT ABSTRACTS OF JAPAN vol. 017, no. 281 (P-1548), 31 May 1993 (1993-05-31) -& JP 05 012776 A (SONY CORP), 22 January 1993 (1993-01-22)
- PATENT ABSTRACTS OF JAPAN vol. 1997, no. 10, 31 October 1997 (1997-10-31) -& JP 09 161367 A (VICTOR CO OF JAPAN LTD), 20 June 1997 (1997-06-20) -& US 5 867 338 A (HAGIWARA MASAKI ET AL) 2 February 1999 (1999-02-02)

## Description

### TECHNICAL FIELD

The present invention relates to a disk loading device for moving an optical disk in/out of a recording/reproduction apparatus for recording or reproducing information on the optical disk. A disk loading device according to the preamble of claim 1 is known from the document JP-A-04 362 562.

### BACKGROUND ART

Recording/reproduction apparatuses for optical disks are widely used for audio disks, video disks, and as data storage apparatuses for computers.

Optical disks include those accommodated within cartridges which are capable of recording/reproduction and primarily used for data storage purposes, and those used in a bare form which are capable of reproduction only, e.g., music CDs and CD-ROMs. Advances in the multimedia technology have enabled simultaneous progress in the digitalization of AV apparatuses and enhancement of AV functions of computers. In the case of optical disks, too, disks are desired which are widely applicable to recording/reproduction of various information, without distinction between AV apparatuses and computers.

Furthermore, the miniaturization of not only AV apparatuses but also personal computers has led to the need for thinner recording/reproduction apparatuses for optical disks.

In other words, optical disk recording/reproduction apparatuses are strongly desired which are thin and which are compatible with various forms of media.

However, since disks accommodated within cartridges and bare disks require different loading methods, it has conventionally been necessary to use a disk loading device dedicated to cartridges and a loading device dedicated to bare disks.

### (Conventional Example 1)

First, a loading mechanism for cartridges having an internal optical disk, which is mainly used as a data storage device, will be described with reference to the figures.

In general, after a cartridge is inserted in an optical disk apparatus having this type of loading mechanism, it is necessary to move the cartridge toward a spindle motor and an optical pickup, and mount the disk on a turntable so as to enter a state for enabling recording or reproduction.

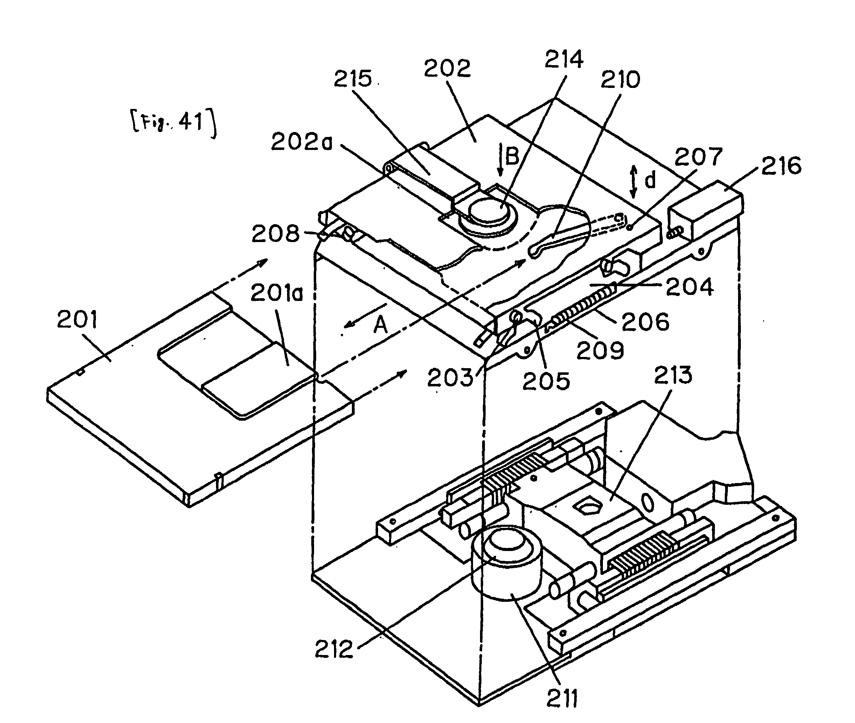

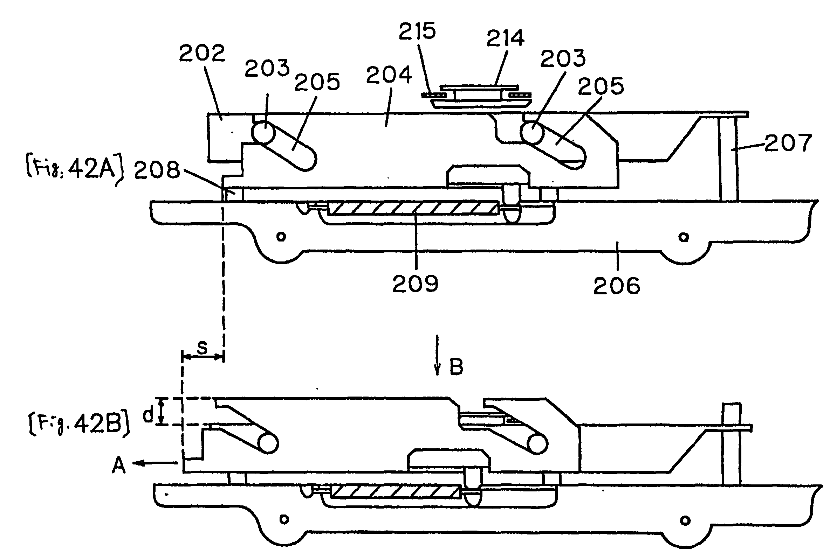

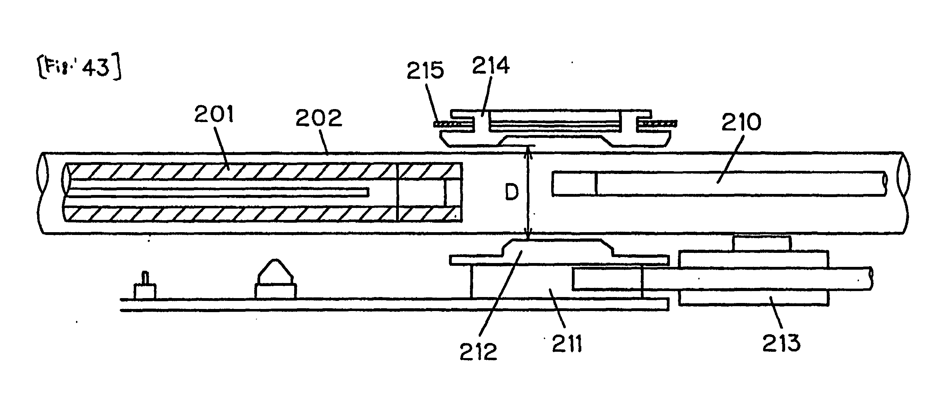

Figure **41** is a perspective view showing the structure of the disk loading mechanism according to Conventional Example 1. Figures **42A** and **42B** are side views illustrating the operation thereof. Figure **43** is a schematic view showing relative dimensions in the device along a thickness direction.

Referring to Figures **41**, **42A**, and **42B**, the cartridge **201** is inserted into a cartridge holder **202** at the front face of the device. At this time, a shutter **201a** of the cartridge **201** engages with a shutter opener **210** incorporated in the cartridge holder **202** so as to slide and expose a portion of the disk within the cartridge **201**. Provided on both sides of the cartridge holder **202** are four guide rollers **203**, which are inserted in guide grooves **205** provided on both sides of a slider **204**. Each guide roller **203** is mounted so as to be movable by only a dimension **d** along the vertical direction, along a guide pole **207** provided on a chassis **206**.

The slider **204** is mounted so as to be capable of sliding by only a dimension **s** along the direction of arrow **A**, along a guide pin **208** provided on the chassis **206**, in a manner to interpose the cartridge holder **202** from below. The slider **204** is always energized by a slider spring **209** in the **A** direction with respect to the chassis **206**. In an initial state, the slider **204** is held by a lock arm (not shown) so that the slider spring **209** remains in its most extended state (see Figure **42A**).

A clamper **214**, which is pivotably supported by a support arm **215**, is disposed in an opening **202a** in the center of the upper face of the cartridge holder **202**, so as to oppose a turntable **212** connected to an axis of a motor **211**. The clamper **214** and the turntable **212** are attracted to each other owing to the attraction force between a magnet and a piece of magnetic material provided within the clamper **214** and the turntable **212**.

Owing to the action of a cam (not shown) provided in a slider **204**, the support arm **215** pivots in accordance with the position of the cam, so as to move the clamper **214** up or down. In an initial state, the clamper **214** is raise to a position where it does not interfere with the inserted cartridge **201** (see Figure **42A**).

With the insertion of the cartridge **201**, the lock arm is released as it is pressed by one corner of the cartridge. When the lock arm is released, the slider **204** slides along the **A** direction owing to the action of the slider spring **209**; the guide rollers **203** move along the guide grooves **205**; and the cartridge holder **202** moves by a dimension **d** in the direction of the chassis **206** (arrow **B**). At the same time, the support arm **215** pivots by the action of the slider **204**, and the clamper **214** moves in the direction of the turntable **212**. As the cartridge is moved down, the disk within the cartridge **201** goes on the turntable **212**, and the clamper **214** is attracted onto the disk from above so that as to mount the disk in a rotatable manner, and the disk approaches an optical pickup **213** down to a distance for enabling recording/reproduction (see Figure **42B**).

When the cartridge is to be taken out of the apparatus, the slider **204** is pulled back by a loading motor **216** against the tensile tension of the slider spring **209**, so that the clamper **214** and the cartridge holder **202** are moved up to their positions in the initial state. As a result, the disk is detached from the turn table, rendering the cartridge ready to be taken out.

As shown in Figure **43**, when the cartridge **201** is to be inserted, a distance (dimension **D**) exceeding the thickness of the cartridge **201** is required between the turntable **212** and the clamper **214**.

### (Conventional Example 2)

Next, a loading mechanism for an optical disk apparatus for bare disks such as music CDs and CD-ROMs will be described with reference to the figures.

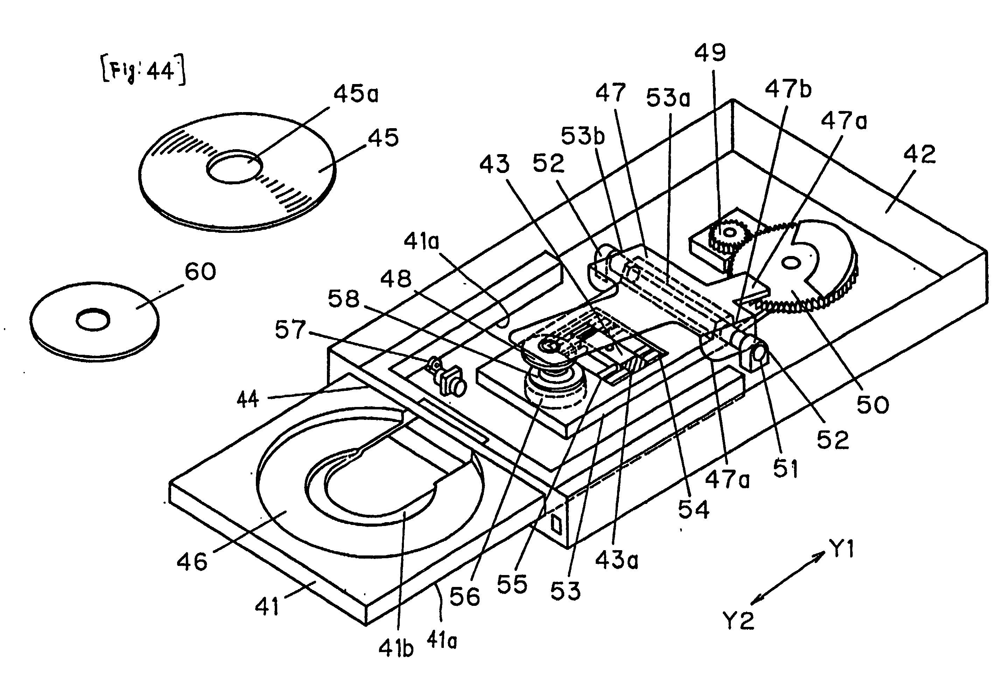

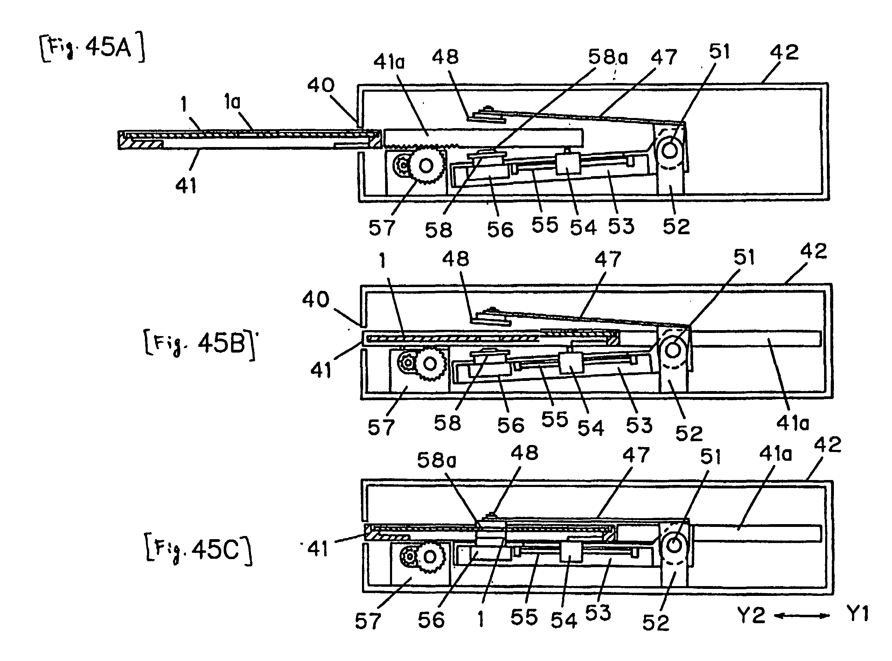

Conventional Example 2 are shown in Figure **44** and Figures **45A**, **B**, and **C**.

Reference **53** denotes a main chassis. Attached to the main chassis **53** are: a disk motor **56**: a turntable **58** which is mounted to an axis thereof; a center cone **58a** on the turntable **58** which engages with a center hole **45a** of a disk **45** as a recording disk; a head **43** which is placed by a guide shaft **55** so as to be slidable along the **Y1-Y2** direction, and which has a coil **43a** for a linear motor mounted thereon; and a magnetic yoke **54** for the linear motor. At one end **53a** of the main chassis **53**, a hole **53b** for pivotal support is provided, and a pivotal axle **51** passes through the hole **53b**.

Similarly, at one end **47a** of a clamp lever **47** is provided a hole **47b** for pivotal support, and the pivotal axle **51** also passes through the hole **47b**. The pivotal axle **51** is affixed to a projection **52** within a housing **42**.

A tray **41** is mounted within the housing **42** so that it is capable of translation along the **Y1-Y2** direction owing to engagement motion between a rack **41a** formed on its back face and an output gear of a loading motor **57** which has a gear unit for deceleration mounted thereon. Moreover, the tray **41** has a dish-like concavity **46** capable of retaining the disk **45** placed therein. A small-diameter concavity is formed inside the concavity **46** to allow a small-diameter disk **60** to be placed in the small-diameter concavity.

Furthermore, a cam **50** is engaged to the rears of the main chassis **53** and the clamp lever **47**, the cam **50** being driven by a geared motor **49**. The main chassis **53** and the clamp lever **47** pivot around the pivotal axle **51** so as to move closer to or away from each other in accordance with the rotational position of the cam **50**. Reference numeral **44** denotes an insertion inlet; **41b** denotes an opening; and **48** denotes a clamper. The operation of the loading motor **57** and the geared motor **49** are subjected to ordinary microcomputer control or the like. The detection of the positions of the cam **50** and the tray **41**, which are driven by the respective motors, is accomplished by an ordinary microswitch or the like. Such details are not shown in the figures, and the descriptions thereof are omitted.

Figures **45A**, **B**, and **C** describe an operation of this conventional disk loading device. Specifically, in the case of using the disk **45** in a disk recording/reproduction apparatus, when an eject/load switch (not shown) is pressed, the tray **41** is moved in the **Y2** direction by the driving force from the loading motor **57**, and goes out of the housing **42** so as to enter the state shown in Figure **45A**, through microcomputer control. At this time, the clamp lever **47** and the main chassis **53** are in moved-away positions from each other around the pivotal axle **51**.

In this state, by placing the disk **45** in the concavity **46** of the tray 41 and pressing the eject/load switch (not shown), the tray **41** is translated into the housing **42** through the insertion inlet **44** owing to the driving force of the loading motor **57** to enter the state shown in Figure **45B**.

Next, the cam **50** rotates so that the clamp lever **47** and the main chassis **53** move closer to each other around the pivotal axle **51** as shown in Figure **45C**, and the disk **45** is sandwiched between the clamper **48** and the turntable **58** of the disk motor **56** so as to engage with the center cone **58a**, thus becoming rotatable. In this state, the recording or reproduction of information from the disk **45** is performed by the head.

When the disk **45** is to be taken out of the apparatus, the exact opposite operation to the above operation is performed.

However, the aforementioned conventional disk loading devices for disks have the following problems.

in accordance with Conventional Example 1, after the cartridge is once horizontally inserted, the cartridge is moved down in the direction of the spindle motor so as to place the disk on the turntable **212** into a state for enabling recording/reproduction by the optical pickup. Therefore, with respect to the space which is left after the cartridge has moved down, a redundant space is created which has a thickness defined by dimension **D** as shown in Figure **43**. Furthermore, it is necessary to retract the clamp **214** to above the cartridge, thereby hindering reduction in the thickness of the device.

On the other hand, it is impossible to directly load a bare disk, such as a music CD and an information CD-ROM, and it is necessary to place the bare disk into a cartridge, called a "caddie", before the cartridge can be loaded. In this case, the caddie must be taken out of the disk loading device every time a disk is exchanged, resulting in complicated operations.

Moreover, due to the nature of cartridge specifications, the positions and sizes of positioning holes in the cartridge may be commonly shared between disk loading devices, but some cartridges may have differently dimensioned shutter front ends due to differences in the shutter structure of each cartridge. When such a cartridge is inserted, even though the cartridge may be inserted and mounted in the holder **202**, the shutter opener **210** will not pivot to the final end of the pivoting path. In such a state, there is a problem in that the shutter opener **210** is susceptible to vibration, and, at impact, the shutter opener **210** may be disengaged from the shutter so that the shutter may be closed within the device.

In accordance with Conventional Example 2, any disks that are accommodated within cartridges cannot be used. Moreover, since the loading motor **57** is disposed under the tray **41**, the thickness of the overall device cannot be reduced by reducing the thickness of the optical head or the disk motor. The device cannot be used in the upright position by merely placing a bare disk on the tray.

If large diameter and small diameter concavities are formed so as to define two stages in the tray **41** in order to use a small-diameter disk, the thickness of the tray **41** is increased, so that the turntable **58** must be retracted along an increased distance during the conveyance of the tray **41** within the device, thereby hindering the reduction in the thickness of the apparatus.

In particular, disk loading devices for notebook-sized personal computer are required to have a thickness of 20 mm or less. Therefore, the tray illustrated in either Conventional Example 1 or 2 cannot satisfy this demand.

Therefore, in view of the aforementioned problems of the prior art, an objective of the present invention is to provide a disk loading device capable of accepting both disks internalized within cartridges and bare disks, and which is capable of being formed in a thin configuration without creating a large redundant space within the device.

An objective of the present invention is to provide a disk loading device which is capable of, for a cartridge having a differently dimensioned shutter front end, securely holding the opened shutter with the cartridge being mounted, and which does not allow the shutter to be closed at impact.

An objective of the present invention is to provide a disk loading device which facilitates exchange of not only disks internalized within cartridges but also of bare disks.

An objective of the present invention is to provide a disk adapter to be mounted in a disk loading device which makes it possible to directly put in or take out small-diameter disks with an operation feeling similar to that of a cartridge, such that the adapter does not need to be drawn out every time small-diameter disks are exchanged.

An objective of the present invention is to provide a disk loading device which makes it possible easily take out a disk internalized within a cartridge or a bare disk even in the absence of supplied power.

An objective of the present invention is to provide a disk loading device which includes a clamper and yet is capable of being formed in a thin configuration without creating a large redundant space within the device.

An objective of the present invention is to provide a disk loading device which is capable of accurately positioning a cartridge with respect to a head so as to compensate for cartridge thickness variation and yet is capable of being formed in a thin configuration without creating a large redundant space within the device.

An objective of the present invention is to provide a disk loading device which can be used in a horizontal installation or a vertical installation to solve the aforementioned problems.

### DISCLOSURE OF THE INVENTION

In order to solve the aforementioned problem, a disk loading device according to the present invention is defined in the appended claims together with a corresponding adapter for the disk.

### BRIEF DESCRIPTION OF THE DRAWINGS

Figure **1** is an exploded perspective view showing the structure of a disk loading device according to an example of the present invention.
Figure **2** is a plan view showing the internal structure of a disk loading device according to the present example.
Figures **3A** to **D** are perspective views of a cartridge and bare disks.
Figures **3E** and **F** are a side view and a cross-sectional view of a cartridge.
Figure **4** is an exploded perspective view showing the internal structure of a holder in a disk loading device according to the present example.
Figure **5** is a perspective view of the holder of Figure **4** in an assembled state.
Figures **6A** to **C** are a two-plane view showing a disk clamp mechanism in a disk loading device according to the present example.
Figure **7** is a perspective view showing a clamp lever in the disk clamp mechanism of Figures **6A** to **C**.
Figures **8A** to **C** are views illustrating an operation of the disk clamp mechanism of Figures **6A** to **C**.
Figures **9A** and **B** are structural views showing a base section of a disk loading device according to the present example.
Figure **10** is a block diagram showing a recording/reproduction apparatus to which a disk loading device according to the present example is applied.
Figure **11** is a circuit diagram of the vicinity of a switch in a disk loading device according to the present example.
Figures **12A** to **D** are outer perspective views showing how a medium is inserted into a disk loading device according to the present example.
Figures **13A** and **B** are plan views (i) showing a loading operation of a disk loading device according to the present example.
Figures **14A** and **B** are plan views (ii) showing a loading operation of a disk loading device according to the present example.
Figures **15A** and **B** are plan views (iii) showing a loading operation of a disk loading device according to the present example.
Figures **16A** to **C** are detailed upper plan views (i) showing a loading operation of a disk loading device according to the present example.
Figures **17A** to **C** are detailed upper plan views (ii) showing a loading operation of a disk loading device according to the present example.
Figures **18A** to **C** are detailed lower plan views (i) showing a loading operation of a disk loading device according to the present example.
Figures **19A** to **C** are detailed lower plan views (ii) showing a loading operation of a disk loading device according to the present example.
Figures **20A** to **D** are side cross-sectional views showing a loading operation of a disk loading device according to the present example (with no medium mounted therein).
Figures **21A** to **C** are plan views (i) showing a holder operation at the time of inserting a cartridge in a disk loading device according to the present example.
Figures **22A** and **B** are plan views (ii) showing a holder operation at the time of inserting a cartridge in a disk loading device according to the present example.
Figures **23A** to **E** are enlarged views showing a cartridge lock mechanism and a holder lock mechanism in a disk loading device according to the present example.
Figure **24** is a plan view of a holder in a disk loading device according to the present example, where a cartridge having a differently dimensioned shutter front end is mounted.
Figures **25A** to **D** are side cross-sectional views showing a loading operation of a disk loading device according to the present example (with a cartridge mounted therein).
Figures **26A** to **C** are principle diagrams showing a cartridge allowable error compensating mechanism in a disk loading device according to the present example.
Figures **27A** to **C** are plan views (i) showing a holder operation at the time of inserting a large-size disk in a disk loading device according to the present example.
Figure **28** is a plan view (11) showing a holder operation at the time of inserting a large-size disk in a disk loading device according to the present example.
Figure **29A** is a partial enlarged view of a disk loading device according to the present example retaining a large-size disk. Figure **29B** is a side view of a disk holder and a disk.
Figures **30A** and **B** are partial cross-sectional views of a disk retention section in a disk loading device according to the present example.
Figure **31A** is a side view of a disk holder and a disk in a disk loading device according to the present example. Figure **31B** is a side view showing how a disk is inserted.
Figures **32A** to **D** are side cross-sectional views showing a loading operation of a disk loading device according to the present example (with a large-size disk mounted therein).
Figures **33A** and **B** are detailed upper plan views (i) showing a cartridge take-out operation in a disk loading device according to the present example in an unpowered state.
Figures **34A** and **B** are detailed upper plan views (ii) showing a cartridge take-out operation in a disk loading device according to the present example in an unpowered state.
Figures **35A** to **D** are side cross-sectional views showing a cartridge take-out operation in a disk loading device according to the present example in an unpowered state.
Figures **36A** to **D** are side cross-sectional views showing a cartridge take-out operation engagement section in a disk loading device according to the present example in an unpowered state.
Figure **37** is a perspective view showing a first example of an adapter according to the present invention.
Figure **38** is a perspective view showing a second example of an adapter according to the present invention.
Figures **39A** to **C** are plan views and cross-sectional views showing how a disk is inserted in the adapter of Figure **37**.
Figures **40A** to **C** are plan views showing how the adapter of Figure **37** is mounted to a holder.
Figure **41** is a perspective view showing a disk loading mechanism according to Conventional Example 1.
Figures **42A** and **B** are side views showing the disk loading device of Figure **41**.
Figure **43** is a schematic diagram showing relative dimensions of the disk loading device of Figure **41** along the thickness direction.
Figure **44** is a perspective view showing a disk loading mechanism according to Conventional Example 2.
Figures **45A** to **C** are side views showing the disk loading device according to Conventional Example 2.

### BEST MODES FOR CARRYING OUT THE INVENTION

Hereinafter, the present invention will be described in detail with reference to the accompanying figures.

First, the structure of an exemplary disk loading device according to the present invention will be described with reference to the figures.

Although the disk loading device according to the present example can be used in a horizontal or vertical installation, the following description will illustrate the disk loading device in a horizontal installation for the sake of explanation.

The present example is directed to bare disks such as music CDs and CD-ROMs having a diameter of 12 cm (hereinafter referred to as large-size disks ) , and smaller bare disks such as 8 cm single CDs (hereinafter referred to as small-size disks) having a smaller diameter than that of large-size disks, and large-size disks accommodated within cartridges (hereinafter referred to as cartridges ) . These three forms of recording media will be collectively referred to as media. Of interest to the disk loading device are forms of media; their recording/reproduction methods, recording density, and the like are not limited to the above examples.

First, the overall structure of a disk loading device will be described, followed by a detailed description of each section.

### (Overall structure of disk loading device)

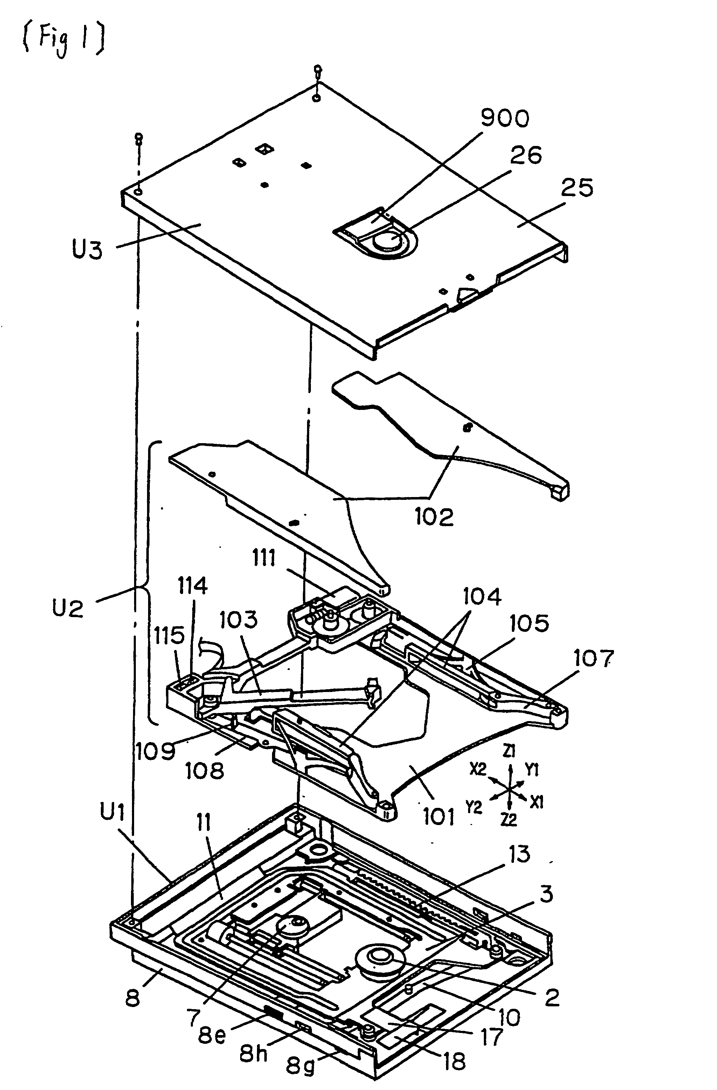

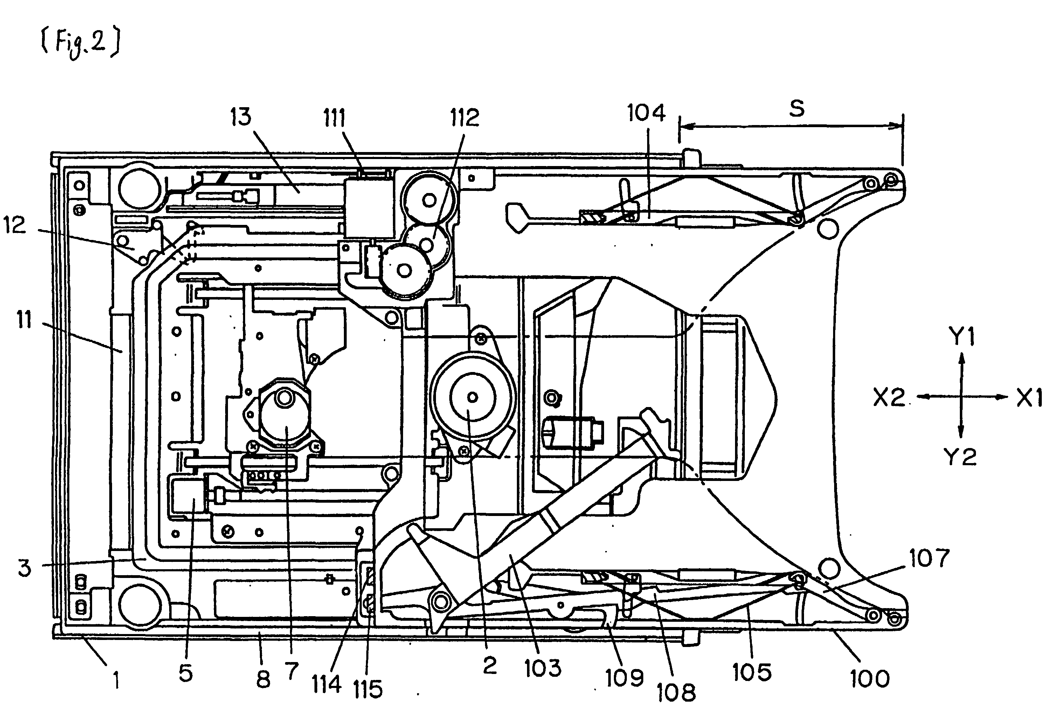

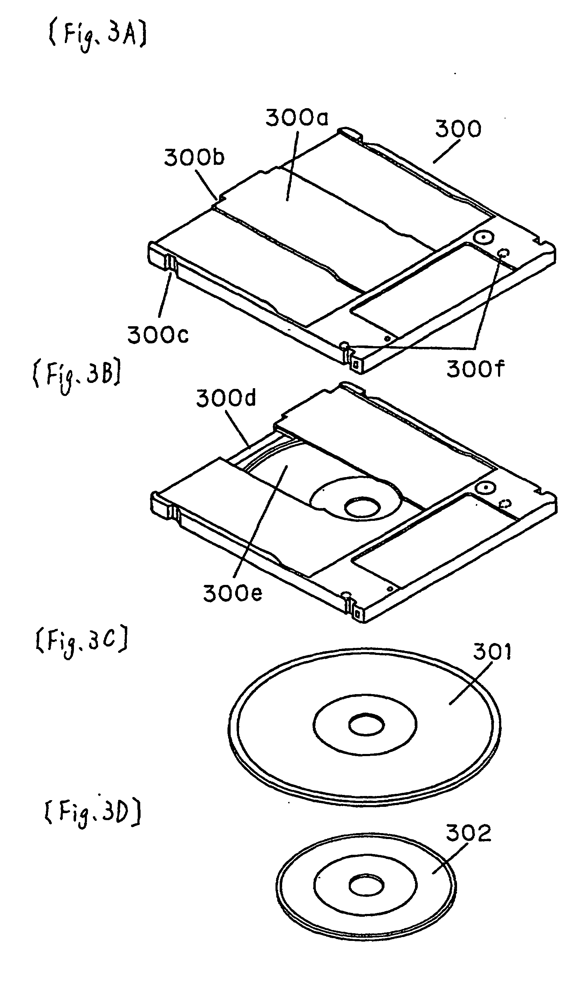

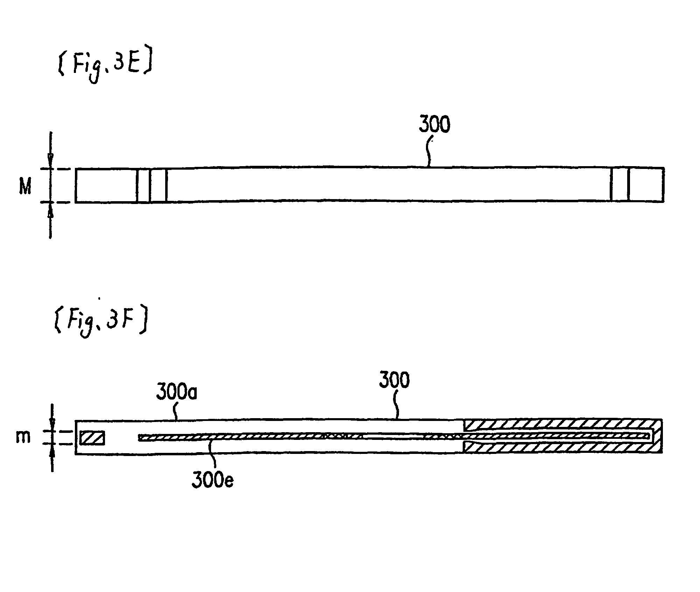

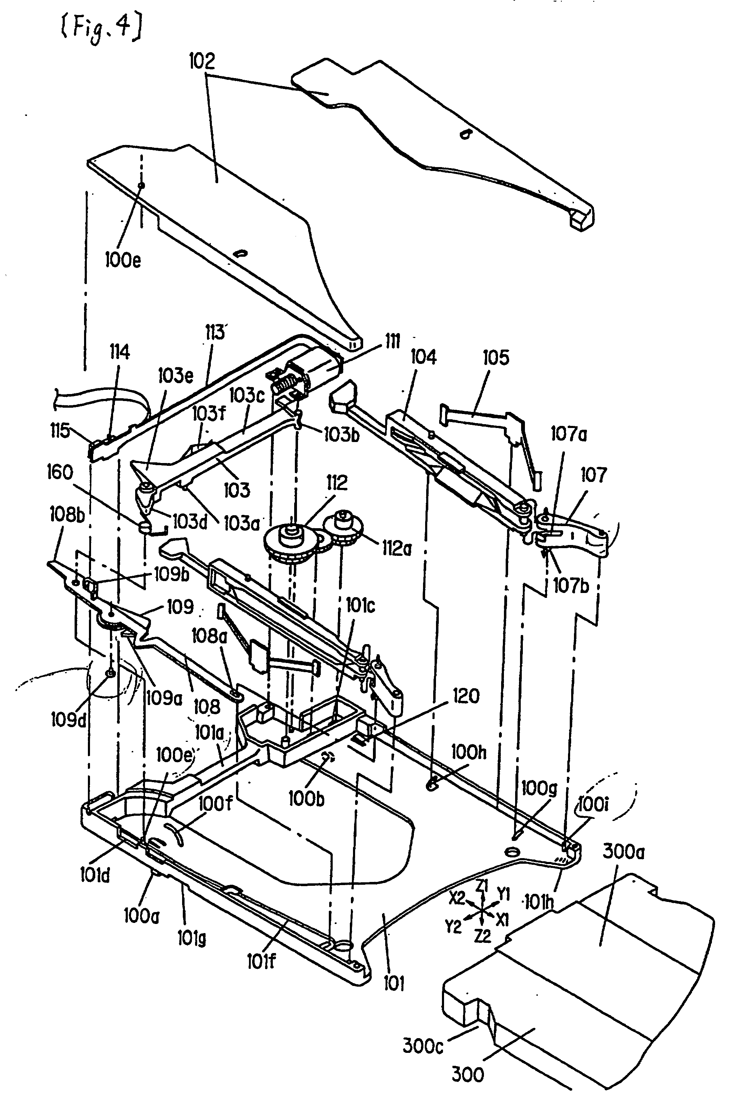

Figure **1** is an exploded perspective view showing the structure of a disk loading device according to an example of the present invention. Figure **2** is a plan view showing the internal structure thereof. Figures **3A** to **D** are perspective views of a cartridge and bare disks. Figures **3E** and **F** are side views of a cartridge. Figure **4** is an exploded perspective view showing the structure of a holder in the disk loading device.

With reference to Figure **1**, the disk loading device according to the present example includes a base section **U1,** a holder section **U2**, and a clamp section **U3**.

The coordinate system for indicating directions in the figures includes a depth direction **X,** a width direction **Y,** and a height direction **Z** of the device.

The base section **U1** incorporates a chassis **3,** which in turn includes an optical head **7** and a turntable-integrated disk motor mounted on a base **8,** and an elevation mechanism for moving it up or down. A holder **100** of the holder section is placed on guide sections on the side faces in the base **8**, whereupon a ceiling **25** of the clamp section is attached.

The ceiling **25** has attached thereto a clamp lever **27** with a clamper **26**, constituting the clamp section **U3**.

The holder **100** of the holder section **U2** incorporates a loading motor **111** and a gear array **112.** The last gear **112a** in the gear array **112** engages with a rack **13a** provided in a slide rack **13** attached to the base **8** so that the holder **100** is driven along the **XI-X2** direction. A driving current for the loading motor **111** is supplied from the base side via a flexible substrate **113**.

Furthermore, the holder **100** incorporates a pair of right and left disk retention mechanisms for guiding and retaining a bare disk, a shutter opener **103** for opening and shutting the shutter of a cartridge, a lock mechanism for a cartridge, a lock mechanism for the holder, and a cartridge energizing spring.

Switches **114** and **115** are provided on the flexible substrate **113**, which are turned ON/OFF by the shutter opener **103** and a junction plate **108**, respectively.

As shown in Figure **2**, the base section U1 incorporates the holder section **U2**. The holder **100** is drawn out by its incorporated loading motor **111** in the **X1** direction by a distance **S** shown in Figure **2** so that a half of a retained disk will be exposed, thereby entering a media exchange stand-by state.

### (Media to be used)

Figure **3A** is a perspective view of a cartridge **300** with its shutter **300a** being closed. Reference numeral **300c** denotes a notch for retention purposes; **300f** denotes a positioning hole.

When the cartridge **300** is inserted part of the way into the holder **100,** a tip end of the shutter opener **103** of the holder **100** engages with a recess **300b** in the front end of the shutter **300a**. As the cartridge **300** is inserted deeper, the shutter **300a** opens to enter the state shown in Figure **3B**, so that a disk **300e** accommodated therein is exposed. At this time, a thin junction section **300d** is also exposed which has a smaller thickness than that of the cartridge **300.**

Figure **3C** shows a large-size disk **301**, and Figure **3D** shows a small-size disk **302.**

Figure **3E** shows a side view of the cartridge **300,** and Figure **3F** shows a cross-sectional view of the cartridge **300.**

The cartridge **300** has a thickness **M.** When the shutter **300a** of the cartridge **300** is opened, its opening has a thickness **m,** where **m** is smaller than **M.**

Hereinafter, the respective sections of the disk loading device will be described in detail.

### (Structure of holder section)

First, the structure of the holder **100** will be described.

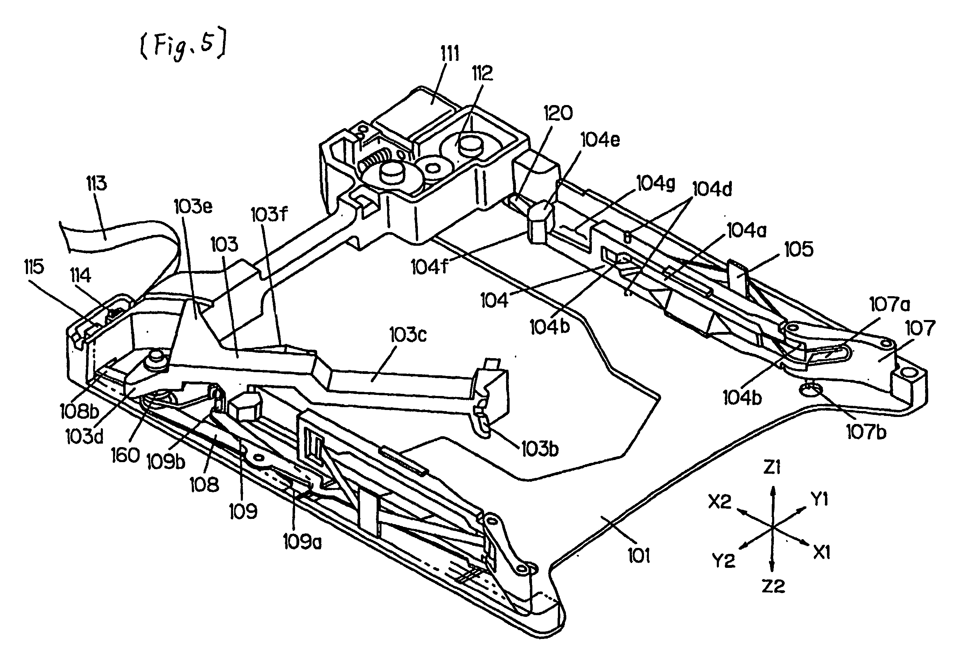

Figure **4** is an exploded perspective view showing the internal structure of the holder **100**, whereas Figure **5** is a perspective view in its assembled state.

With reference to Figure **4**, a holder cover **102** is attached upon a holder case **101**, whereby the box-like holder **100** is constructed. The opening provided in the **X1** direction serves as a medium insertion inlet for allowing a medium to be inserted in the **X2** direction. Its internal space has a height which is equal to the thickness of the cartridge **300** plus an appropriate interspace, and a width which is equal to the width of the cartridge plus a margin for allowing a retention mechanism for a bare disk (described later) to retract. The bottom face of the holder case **101** has an opening, through which an optical head is inserted from below, and its central portion at the farthest back is notched from above and below so as to define a thin junction section **101a**. The holder cover **102** is split into right and left portions, so that a space is provided in the central portion of the holder which has the same width as that of the junction section **101a**.

The insertion inlet of the holder case **101** and the holder cover **102** is configured so that its opposite (right and left) ends protrude in the **X1** direction, leaving a recess in the center. Only at the right and left protrusions does the bottom face of the holder case **101** further inwardly extend from the holder cover **102**, whereby a receptacle **101h** is defined. When the cartridge **300** is inserted, the leading edge of the cartridge **300** is first placed on the receptacle **101h** to facilitate the insertion.

Provided at the back end of the holder **100** are a portion for attaching the loading motor **111** and the driving gear array **112**, a portion for attaching the shutter opener **103**, a portion for attaching the junction plate **108** and a holder lock **109**, and two projections **100a** and **100b** which are under the bottom face. Otherwise the structure is bilaterally symmetrical.

The last gear **112a** in the driving gear array protrudes under the holder through a hole **101c** in the bottom face of the holder case **101** so as to cooperate with the driving mechanism incorporated in the base **8**. The operations of the gear **112a** and the two projections **100a** and **100b** will be described later.

The shutter opener **103** is incorporated so as to be pivotable around an axis **100e** which is formed by a hole and a boss provided at the same position in the holder case **101** and the holder cover **102**. A projection **103a** engages with an arc groove **100f** which is concentric with the hole **100e**, thereby restraining the pivoting angle. As the projection **103a** of the shutter opener **103** is energized by a spring **160** to an end of the arc groove **100f** near the medium insertion inlet, the tip end **103b** comes to a position where it abuts with the recess **300b** of the cartridge shutter **300a** which has been inserted in the holder case **101**. The tip end **103b** of the shutter opener **103** is of a cylindrical configuration having a height which is substantially equal to the thickness of the cartridge **300**, and is notched at its end facing an inserted medium so as to leave the upper and lower ends thereof. As a result, once the end face of an inserted bare disk abuts with the tip end **103b**, the end face of the bare disk is prevented from sliding upward or downward out of engagement with the tip end **103b**.

A projection **103d** which is disposed at the opposite end of the shutter opener **103** laterally protrudes through a hole **101d** in a side face of the holder case **101**, and is accommodated within the holder as the shutter opener **103** pivots toward the rear. When the holder **100** is drawn out of the device to enter a media exchange state, the projection **103d** is received in an outlet hole **8e** in the side wall of the base **8** located in a position corresponding to the hole **101d**, so that the tip end of the shutter opener **103** is pivoted in the **X1** direction. When the holder **100** is drawn in, the projection **103d** is pressed by the side wall of the base **8** so that the projection **103d** will be accommodated within the holder, causing the shutter opener **103** to quickly pivot to the back end of the holder.

An arm **103c** of the shutter opener **103** is notched from above and below so as to have a thickness which is substantially equal to that of the junction section **101a** at the back end of the holder case **101**.

A projection **103e** on the shutter opener **103** turns ON the switch **114** provided on the flexible substrate **113** at a certain angular position of the shutter opener **103**.

An opener plate spring **103f** provided on the shutter opener **103** abuts with the back end wall of the holder case **101** at the end of the pivotal action of the shutter opener **103** so as to energize the shutter opener **103**.

Next, a holder lock mechanism will be described.

The holder lock mechanism includes inlet levers **107**, a junction plate **108**, and the holder lock **109**.

The holder lock **109** has a hook **109a** and an elevated portion **109b**, and is attached to the lower face of the junction plate **108** so as to be pivotable around an axis **109d**. The junction plate **108** is attached so as to be pivotable around the axis **100e** within an indentation **101f** provided in the bottom face of the holder case **101**. The holder lock **109** is energized by the spring **160** so that the elevated portion **109b** is forced toward the inside of the holder.

An elongated hole **108a** at a tip end of the junction plate **108** engages and cooperates with a projection **107b** at a tip end of an inlet lever **107**. The inlet lever **107** is attached so as to be pivotable around an axis **100i** within an arc groove **100g**, and is energized, along with a disk holder **104**, toward the inside of the holder by a spring **105**. Immediately following the insertion of the cartridge **300**, the inlet levers **107** are pushed toward the outside of the holder, and the junction plate **108** also pivots toward the outside, so that the hook **109a** of the holder lock **109** protrudes out through a hole **101g** in the side face of the holder case **101**. In this state, the elevated portion **109b** of the holder lock **109** stands in the pathway of the cartridge **300**. When the cartridge **300** reaches the rear, the elevated portion **109b** is pushed outward, and the hook **109a** conversely pivots toward the inner side so as to be accommodated within the holder. In other words, the hook **109a** is arranged so as to protrude out of the holder only during the insertion of the cartridge **300**.

A projection **108b** on the junction plate **108** usually keeps the switch **115** provided on the flexible substrate **113** in an ON state, but turns the switch **115** OFF immediately after the junction plate **108** pivots along with the pivoting of the inlet levers **107**.

Next, a cartridge lock mechanism will be described.

The rear end of each disk holder **104** defines an elastic structure including projections **104e** and **104f** and an arm **104g**. When the cartridge **300** is inserted, the inner projections **104f** are pushed outward by the side faces of the cartridge **300** so that the outer projections **104e** temporarily protrude to the holder side faces. When the notches **300c** of the cartridge 300 reach where the projections **104f** are, the projections **104f** slip into the notches **300c** so that the projections **104e** and **104f** return to their original positions due to the elasticity of the arms **104g**.

Finally, a disk retention mechanism for guiding and retaining a bare disk will be described.

The disk retention mechanism includes the disk holders **104**, the holder plate spring **105**, and the inlet levers **107**.

Each disk holder **104** restrains the position of a bare disk along the height direction with a slit **104a** having a slope toward the inside of the holder, and restrains the position of the bare disk along the radius direction with retention sections **104b** at opposite ends of the slit **104a**.

The disk holders **104** engage with the inlet levers **107** in a pivotable manner at their tip ends, so that projections **104d** provided in two positions, i.e., above and below, are inserted into respective guide grooves **100h** provided in the holder case **101** and the holder cover **102**.

The inlet levers **107** are mounted so as to be pivotable around the axis **100i.** Projections **107b** are inserted in the arc grooves **100g**, and energized, along with the disk holders **104**, toward the inside of the holder by the holder plate spring **105**. Usually, the projections **104d** and **107b** are stopped where they abut with the respective ends of the guide grooves **100h** and the arc grooves **100g** nearer the inside of the holder. At this time, the pair of (right and left) disk holders **104** are maintained in parallel to the **X** direction, so that the interspace therebetween is smaller than the diameter of the bare disk to be inserted.

The inserted bare disk abuts with the tip end of the shutter opener **103** and, while causing the shutter opener **103** to pivot toward the rear, temporarily press open the tip ends of the inlet levers **107** and the disk holders **104** and then slip into the slits **104a**, so that the disk holders **104** return to their original positions.

At this time, the shutter opener **103** is abutting with the bare disk with the aforementioned switch **114** still being in the OFF state. By slightly pressing in the bare disk so as to press open the rear ends of the disk holders **104** from this position, the projection **103e** on the shutter opener **103** turns ON the switch **114**. When the bare disk is let go of, the disk holders **104** return to their original positions.

By ensuring that the four abutting sections **104b** are disposed wide apart relative to the diameter of the bare disk so as to secure a predetermined interspace between the outer plurality of the disk, and a predetermined interspace between the width of the slits **104a** and the disk thickness, the rotation operation of the disk becomes possible with the disk holders **104** being in their original positions.

When the cartridge **300** is inserted, corners of the cartridge **300** press the inlet levers **107** toward the outside of the holder. In order to allow for smooth press-down, indentations are provided in the abutting faces. As the inlet levers **107** pivot, the disk holders **104** also move, causing the tip ends of the disk holders **104** to open wide. As the cartridge **300** is further inserted, the disk holders **104** are also pressed down by the cartridge **300**, so that the disk holders **104** and the inlet levers **107** are accommodated in line at the right and left ends of the holder, thereby securing a pathway for the cartridge **300**.

As will be seen from the above configuration, the disk holders **104** stand by in a position where they are capable of retaining a bare disk. When the cartridge **300** is inserted, its corners will press the inlet levers **107**, causing the disk holders **104** to be retracted and accommodated at the right and left ends of the holder.

The holder case **101** incorporates a cartridge energizing spring **120**, which presses the front corners of the cartridge **300** in the direction of the holder cover **102** (i.e., the **Z1** direction).

### (Structure of clamp section)

Next, the structure of a clamp section will be described.

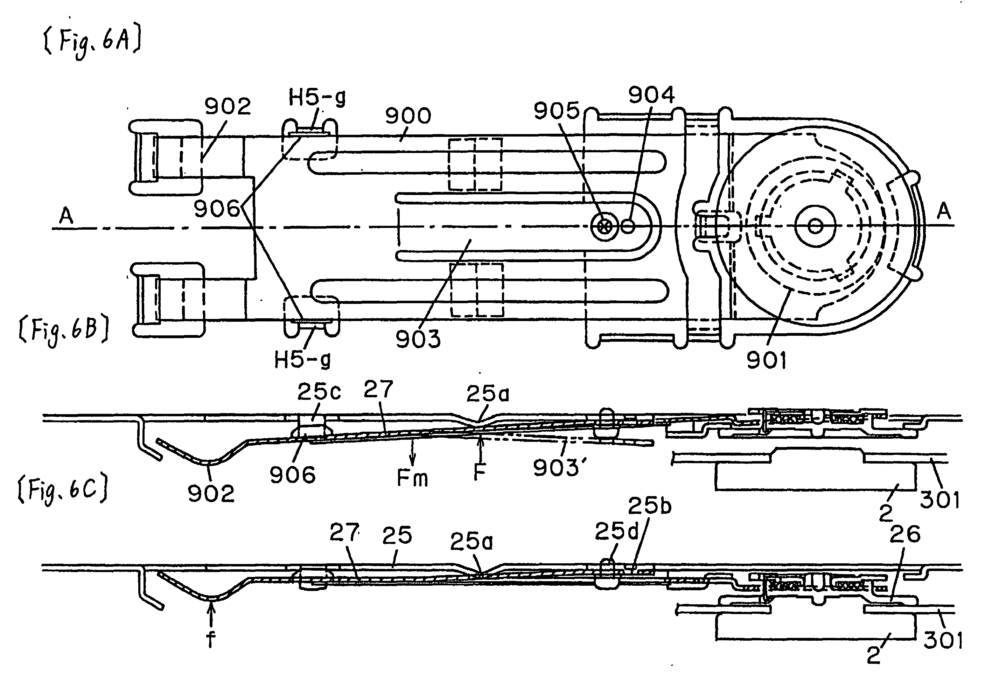

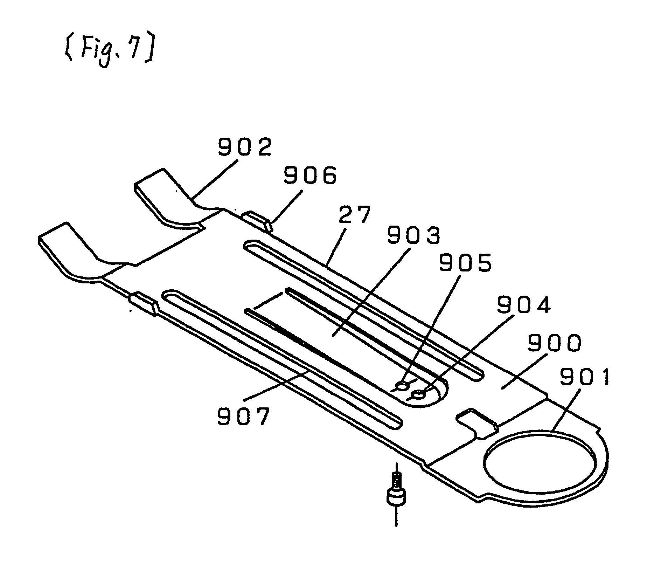

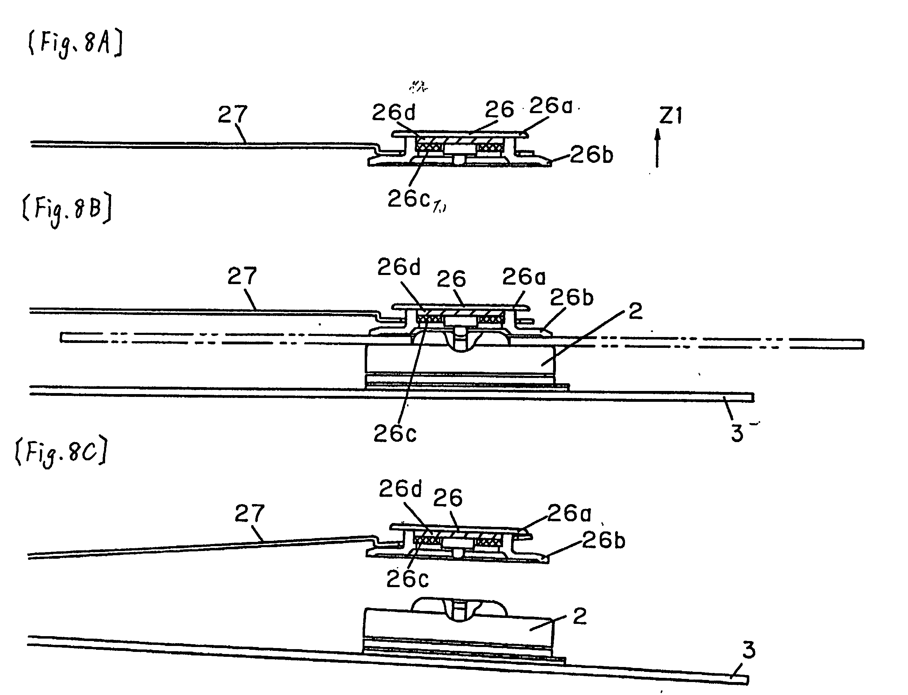

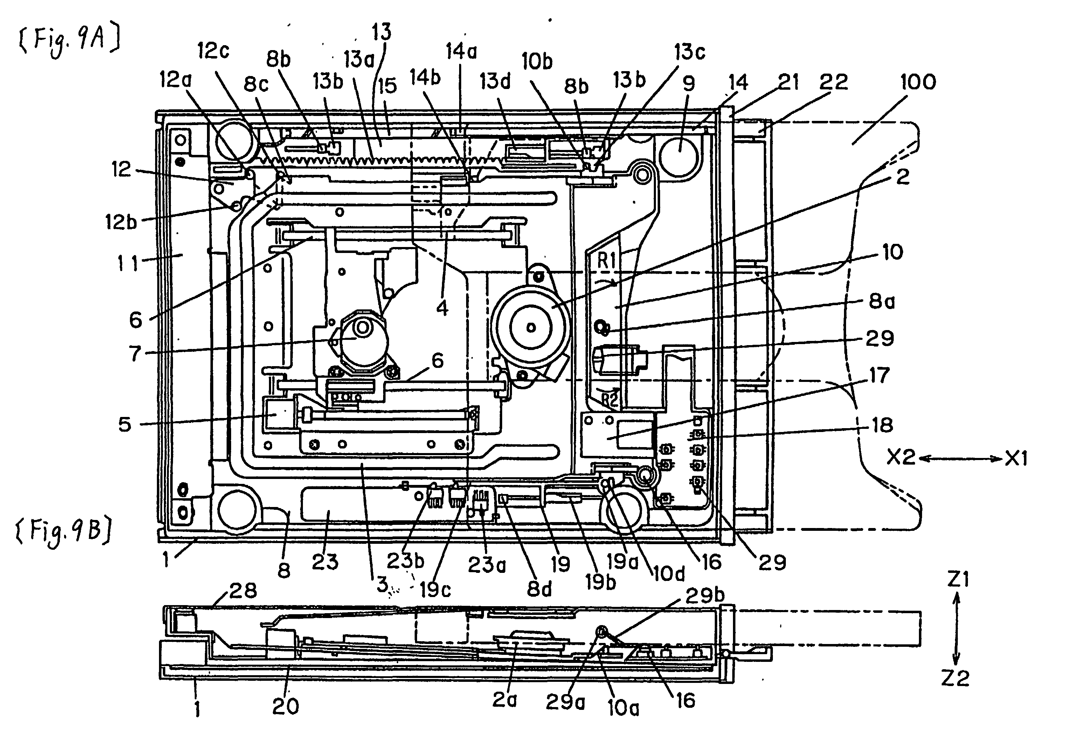

Figures **6A** to **C** show a disk clamp mechanism. Figure **6A** is a plan view; Figure **6B** is an elevated cross-sectional view showing a state where a clamp is not mounted; and Figure **6C** is an elevated cross-sectional view showing a state where a clamp is mounted. Figure **7** is a perspective view showing a clamp lever.

In Figures **6A** to **C**, reference numeral **301** denotes a large-size disk; **2** denotes a disk motor; and **26** denotes a clamp.

Reference numeral **25** denotes a ceiling; and **25a** denotes a fulcrum around which the clamp lever **27** pivots so as to move up or down the clamp (states shown in Figures **6B** and **C**).

Reference numeral **25b** denotes a reference pin; and **25c** denotes a fold for restraining the pivoting of the clamp lever. Reference numeral **27** denotes the clamp lever according to the present invention, at a tip end of which is a hole **901** for incorporating the clamp **26** therein, and at the other end of which is a point of action **902** for generating force **f** for pivoting the clamp lever. Reference numeral **903** denotes a cantilever elastic plate spring which is stripped out of the clamp lever from the fulcrum toward the clamp **26**. A reference hole **904** and a screw hole **905** are provided at a tip end of the cantilever elastic plate spring **903**, where it is affixed to the ceiling **25** with a screw. The affixation can also be achieved by methods such as caulking, welding, or the like.

Reference numeral **906** denotes a fold for providing width restraint, which engages with the fold **25c** provided on the ceiling for restraining the pivoting of the clamp lever.

The initial state of the cantilever elastic plate spring **903** is shown at a double-dot-dash line **903'** in Figure **6B**. Its initial deflection generates pressing force **F** against the ceiling and restoration spring force **Fm**.

Figure **7** is a perspective view showing the clamp lever, which is provided so as to fit within a window opening that emerges as the shutter **300a** of the cartridge **300** opens. Thus, it is possible to implement the disk loading device in a thin configuration.

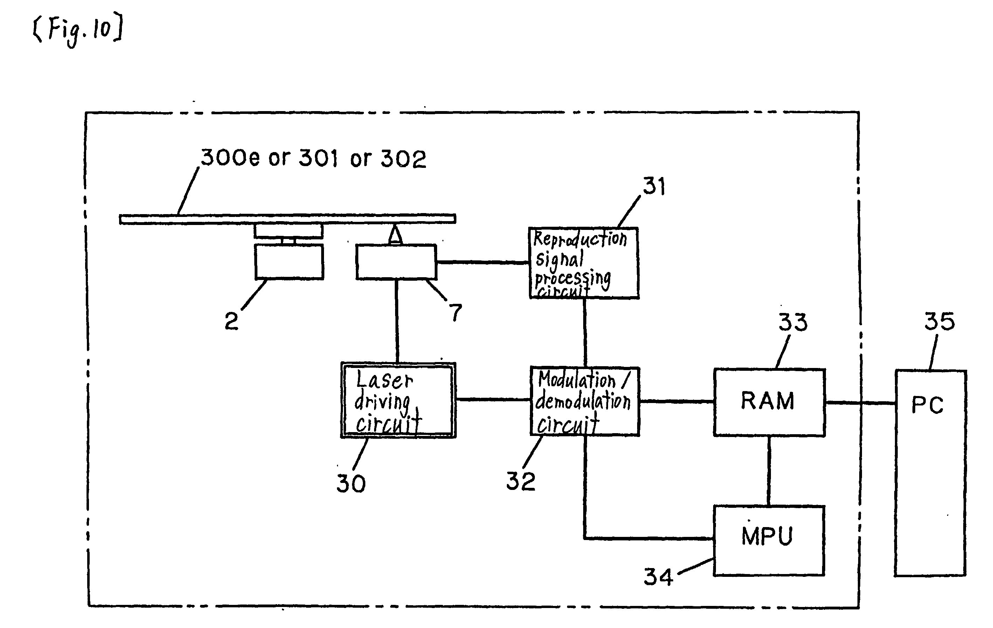

Figure **8A** shows the structure of the clamp **26**. A magnetic element **26d** and a magnet **26c** are housed in a clamper **26b,** which is provided within a central hole of the clamp lever **27** composed of a magnetic material, and stabilized by a clamp cover **26a**. In this state, which defines a magnetically stable state between the clamp **26** and the clamp lever **27**, the clamp **26** magnetically floats in such a manner that the magnetic element **26d** moves away from the clamp lever **27** with the magnet **26d** interposed therebetween.

Figure **8B** shows the case where the disk motor **2** is in the vicinity of the clamp **26**. In this case, the clamp **26** is attracted to a magnetic element of the disk motor **2**, so that the magnetic floating between itself and the clamp lever **27** is deactivated. If there is a disk, the disk is subjected to magnetically attraction onto the turntable of the disk motor **2** by means of the clamp **26**.

Figure **8C** shows the case where the disk motor **2**, which includes a magnetic element at a portion adjacent to the clamper, is not in the vicinity of the clamp **26**. In this case, which defines a magnetically stable state between the clamp **26** and the clamp lever **27**, the clamp **26** magnetically floats away from the disk motor **2**.

### (Structure of base section)

Figures **9** are views showing the base section of the disk loading device according to the present invention: Figure **9A** is a plan view only showing the base section, and Figure **9B** is a side cross-sectional view.

With reference to Figure **9A**, reference numeral **1** denotes a housing for the disk loading device. A printed circuit board **20** carrying circuit elements for recording/reproduction mounted thereon, a panel **21**, and a shutter **22** for shutting an opening **21a** at the front of the housing **1** when the holder **100** is accommodated are mounted on the housing **1**.

On the panel **21**, a button (not shown) for expelling or accommodating the holder **100** and a hole for forced ejection (not shown) for taking out the cartridge **300** or a bare disk (i.e., the large-size disk **301** or the small-size disk **302**) in an unpowered state.

Reference numeral **8** denotes a base which is elastically supported by the housing **1** via dampers **9** for alleviating the external vibration or shock. A torsion leaf **11** is affixed to the chassis **3**. The torsion leaf **11** is mounted to the base **8** so as to constantly energize a tip end **3a** of the chassis **3** in the **Z2** direction.

An elevation cam **10** is axially supported by an axis **8a** of the base **8**. When the cam **10** is pivoted in the direction of arrow **R1** by the driving means composed of the deceleration device **112** and the loading motor **111** provided in the holder **100**, the elevation cam **10** engages with a slit **3b** of the chassis **3** at a slope **10a,** so as to push up the tip end **3a** of the chassis **3** in the **Z1** direction against the spring energization force of the torsion leaf **11**, and orient the chassis **3** to be substantially horizontal. At this time, the chassis **3** is supported by a horizontal face at an end of the slope **10a**. When the elevation cam **10** is pivoted in the direction of arrow **R2**, the chassis **3** is tilted from the horizontal position along the slope **10a** of the elevation cam **1**, in the **Z2** direction, by the spring energization force of the torsion leaf **11**. A head unit energization spring (not shown) is provided between the elevation cam **10** and the base **8**, so that the holder **100** is spring-energized against the ceiling **25** via the chassis **3**.

The slide rack **13** has the rack structure **13a**, which engages with the gear **112a**, on its upper face. A groove **13b** engages with a projection **8b** of the base **8** so as to be retained so as to be slidable along the **X1-X2** direction, and a groove **13c** engages with a pin **10b** of the elevation lever **10**. When a claw **12c** of a clutch **12** engages with a projection **8c** of the base **8** so as to stabilize the slide rack **13**, the holder **100** becomes capable of moving. When the engagement between the claw **12c** of the clutch **12** and the projection **8c** of the base **8** is canceled, the slide rack **13** slides so that the elevation cam **10** can pivot. The rib **10a** of the slide rack elevation cam **10** abuts with a driving detection switch **23b** at the completion of the loading operation, i.e., when the accommodation of the holder **100** is completed thereby orienting the chassis **3** substantially horizontal, and a central processing unit (MPU) orders stopping the driving means.

The forced ejection lever **14** is energized in the **X1** direction by a forced ejection spring **15**, and retained between the base **8** and the slide rack **13** so as to be slidable between the **X1-X2** direction. The forced ejection lever **14** has a claw **14a** which engages with an engagement section **100c** in a lower portion of the holder **100**. When taking out a medium which is stored in the holder **100** in an unpowered state, e.g., when power failure occurs, a pin is thrust in the **X2** direction through a hole for forced ejection (not shown) in the panel **21**, and while compressing the forced ejection spring **15** with the pin, the claw **14a** is engaged with the projection **100c** in the lower portion of the holder **100**. By subsequently releasing the forced ejection spring **15**, the holder **100** being engaged with the claw **14a** is ejected out of the device. Then, by manually pulling the holder **100** to the expelled position, the cartridge **300** or the bare disk which is stored within the holder **100** can be taken out.

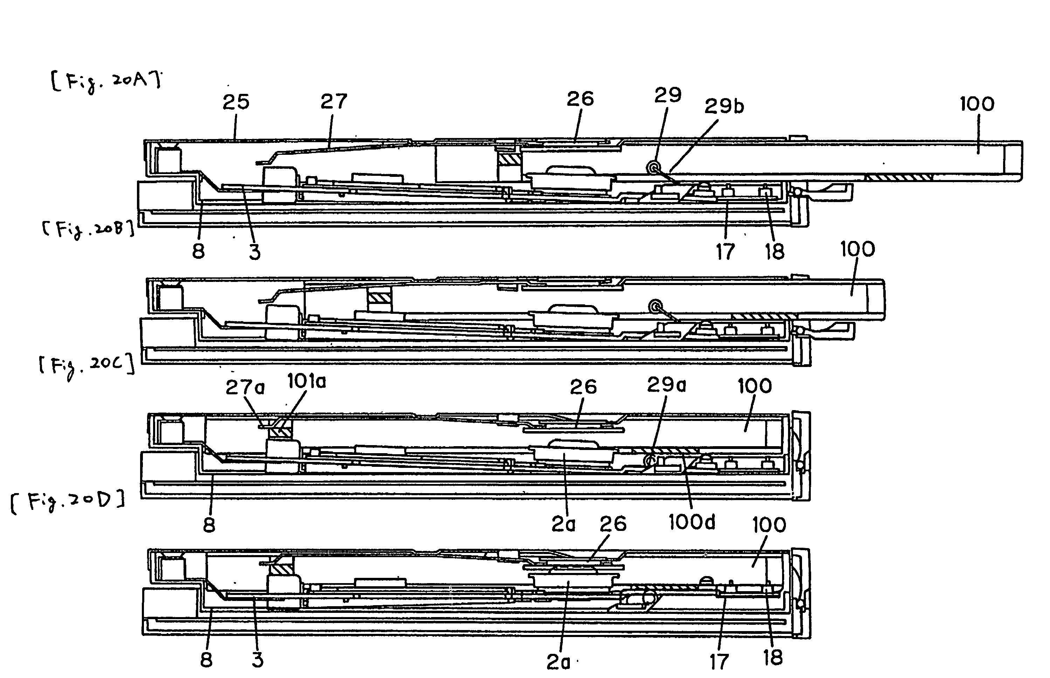

A disk restraining member **29** is composed of a roller **29a**, which is formed of a rubber of lower hardness than PC (polycarbonate) which serves as the disk substrate, and a coil spring **29b** (shown in Figures **20A** to **D** and Figures **25A** to **D**). The disk restraining member **29** contacts the bare disk stored in the holder **100** and the disk **300e** within the cartridge **300** between the completely expelled position and the completely accommodated position of the holder **100**, thereby restraining postures of these disks and the chassis **3** obliquely energized with respect to the base **8** so that they become substantially parallel and preventing each disk from contacting the turntable **2a** on the chassis **3**. Once the accommodation of the holder **100** into the disk loading device is completed, a lower face **100d** of the holder **100** and the roller **29a** abut with each other so that the disk restraining member **29** is stored into the base **8**, thereby canceling the restraint on these disks by the disk restraining member **29**.

Further provided on the base **8** are the clutch **12** for switching the motion of the slide rack **13**, and a driving detection circuit board **23** having a switch **23a** for detecting the completion of expelling of the holder **100** and the switch **23b** for detecting the completion of storage of the holder **100**.

Provided on the chassis **3** are the disk motor 2 integral with the turntable **2a**, guide shafts **6**, a feed motor **5**, a cartridge detection circuit board **18** which is elastically supported via a switch circuit substrate support **17**, and a pin **16** for cartridge positioning. On the face of the turntable **2a** opposing the clamp **26**, a magnetic element (not shown) is provided which generates attraction force to the magnet (not shown) within the clamp **26**.

On the guide shafts **6**, a head transfer lever **4** is provided so as to be movable along the **X1-X2** direction between the chassis **3**, with one end being capable of abutting with the optical head **7** and the other end being capable of abutting with the forced ejection lever **14**.

The optical head **7**, which is mounted on the guide shafts **6** and reciprocates along the **X1-X2** direction by the action of the feed motor **5**, includes a laser emission section for recording/reproduction purposes and a light sensitive portion for receiving reflected light from the disk (**300e**, or **301**, **302**).

Reference numeral **26** denotes a clamp which is mounted to the ceiling **25**. A magnet (not shown) for being attracted to the turntable **2a** so as to retain a disk is provided within the clamp **26**. The clamp **26** is energized away from the turntable **2a**, via the clamp lever **27** protruding from the ceiling **25** toward the holder **100**, by a clamp pressuring spring **28**. The ceiling **25** is mounted to the base **8** by of a mounting means such as an anchor claw. When the holder **100** has moved from the completely expelled position to the completely accommodated position, the clamp lever **27** is pushed by the operation piece **101a** so that the clamp **26** pivots against the clamp pressuring spring **28**, thereby pressing each disk onto a center cone of the turntable **2a**. On the other hand, once the holder **100** begins to move toward the expelled position, the operation piece **101a** is detached from the clamp lever **27**, so that the clamp **26** is detached from the turntable **2a**.

The clamp **26** will be unnecessary where a method is employed in which the disk itself has a magnetic metal hub and the turntable **2a** has a magnet so that the magnet attracts the metal hub for retaining the disk. Thus, depending on each method, mechanisms may be incorporated as required.

Figure **10** is a block diagram showing a recording/reproduction apparatus to which the disk loading device according to the present example is applied. This recording/reproduction apparatus is provided on the main chassis **3** and the circuit board **20**.

In this recording/reproduction apparatus, a laser driving circuit **30** controls the optical head **7** so that laser light is radiated from the optical head **7** onto the disk (**300e** or **301**, **302**) and a signal from the disk is received by the light sensitive portion of the optical head **7**. The output from the optical head **7** is processed by a reproduced signal processing circuit **31**, and the output from the reproduced signal processing circuit **31** is demodulated by a modulation/demodulation circuit **32**, so that the data which has been obtained as a result of the demodulation is output, via a memory **33**, to an external personal computer **35**. Upon receiving the data from the external personal computer **35** via the memory **33**, the modulation/demodulation circuit **32** modulates the data and feeds its to the laser driving circuit **30**. The laser driving circuit **30** controls the optical head **7** so that laser light is radiated from the optical head **7** onto the disk (**300e** or **301**, **302**), thereby recording the modulated output from the modulation/demodulation circuit **32** on the disk. The central processing unit **34** has overall control of the recording/reproduction apparatus.

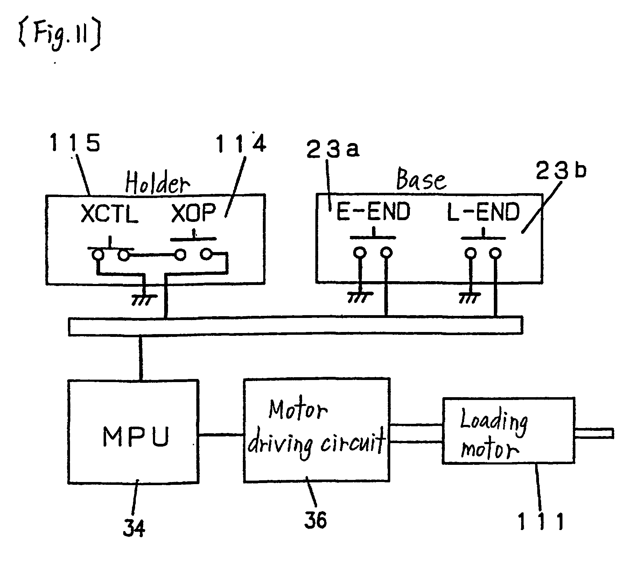

Figure **11** is a structural diagram showing how the respective switches in the holder **100** and the base **8** are interconnected.

The switches **114** and **115** of the holder **100** are connected in series, and are monitored by the central processing unit **34** along with the switches **23a** and **23b** of the base **8** so that the switches **114** and **115** are only activated when at the completion of expelling of the holder **100** (i.e., the switch **23a** is in an ON state).

Specifically, when a bare disk is inserted into the holder **100**, the shutter opener **103** turning the switch **114** ON, the central processing unit **34** controls the driving of the loading motor **111** via the motor driving circuit **36**.

When a cartridge is inserted, the inlet levers **107** will pivot first so that the junction plate **108** turns the switch **115** OFF. Therefore, even if the shutter opener **103** turns the switch **114** ON during insertion of a cartridge, the loading motor will not be driven.

### [Operation of the Example]

The operation of the disk loading device having the aforementioned structure will now be described.

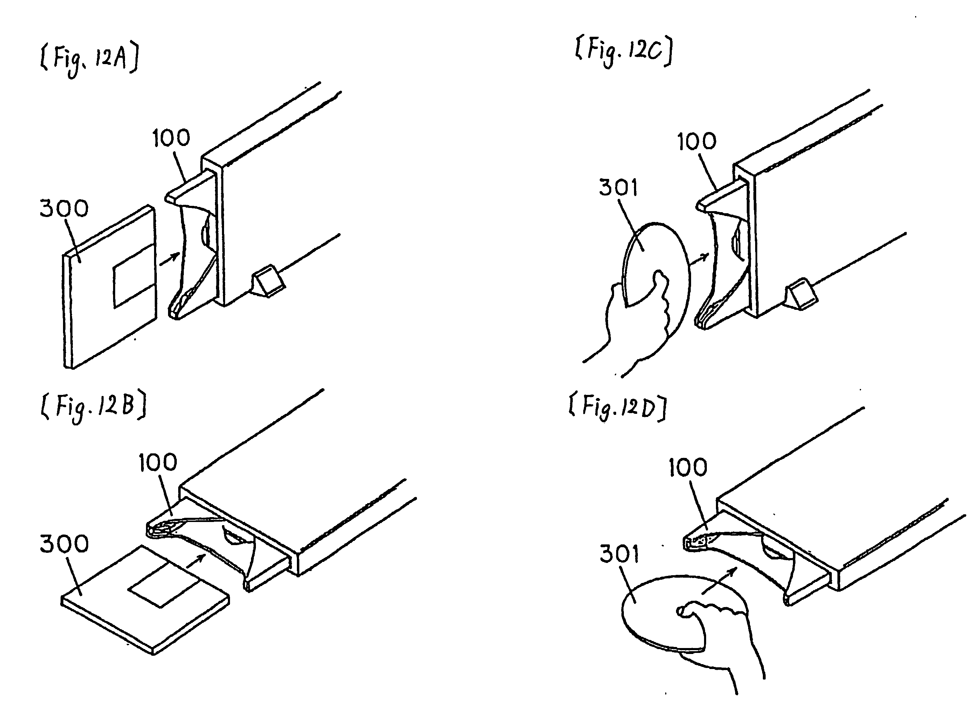

Figures **12** are outer perspective view showing how a medium is inserted. Owing to the aforementioned constitution of the holder **100**, the loading mechanism can be used in either a vertical or horizontal posture. Figures **12A** and **B** show the insertion of a cartridge. Figures **12C** and **D** show the insertion of a large-size disk.

The outline of the loading operation is as follows: When a button provided on the front face of the device is pressed, the holder **100** is drawn out to a position shown in the figures, thereby entering a media insertion stand-by state. From this state, by pressing the button again or pushing the holder **100** in, the holder **100** will be drawn into the device.

### (I) Loading operation when no medium is mounted in the holder

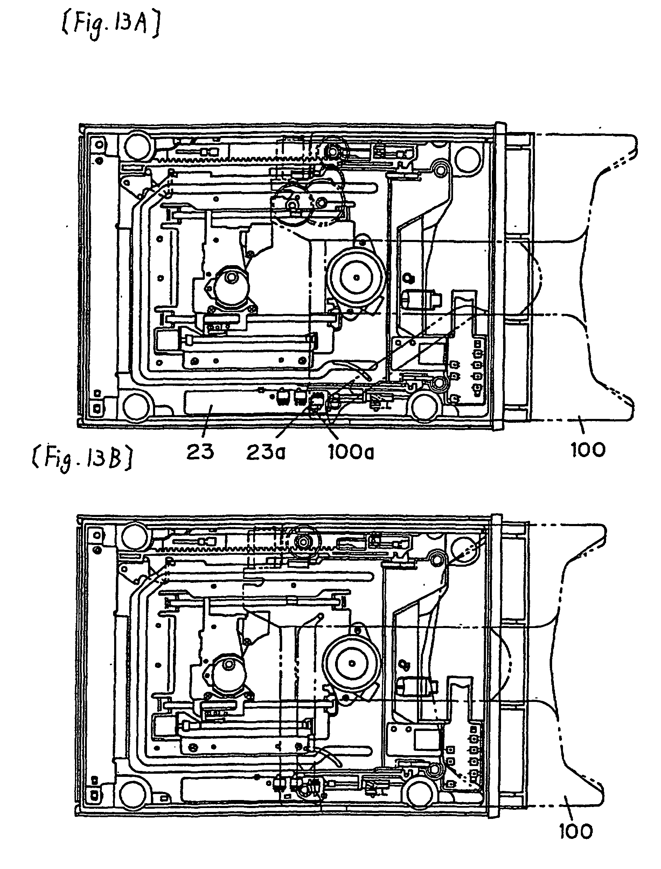

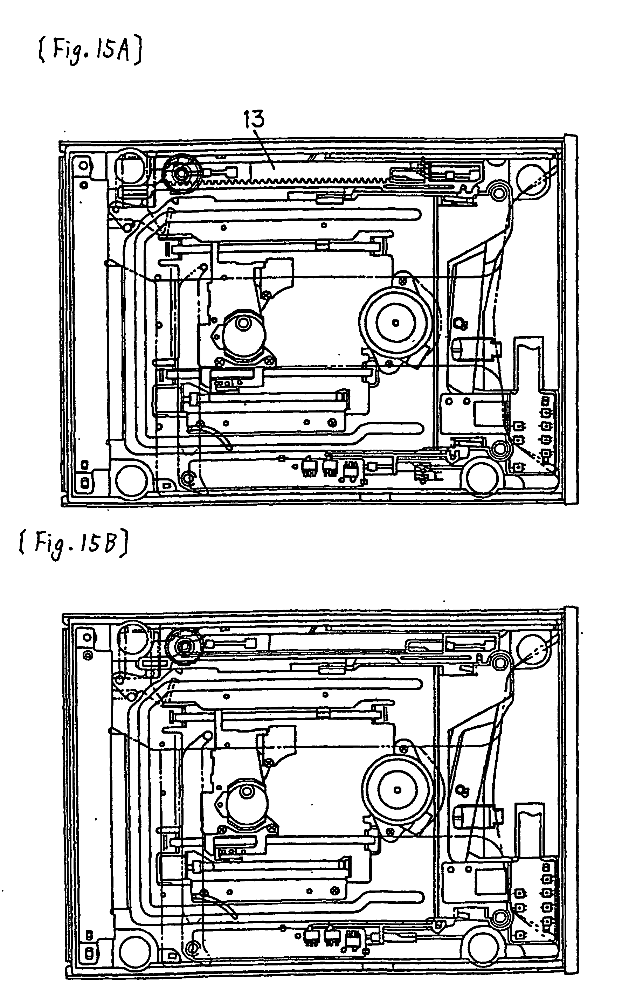

Figures **13A**, **B** through Figures **15A**, **B** show plan views showing a loading operation with no medium mounted in the holder **100**. Figures **13A**, **B** through Figures **15A**, **B** show chronological operation states.

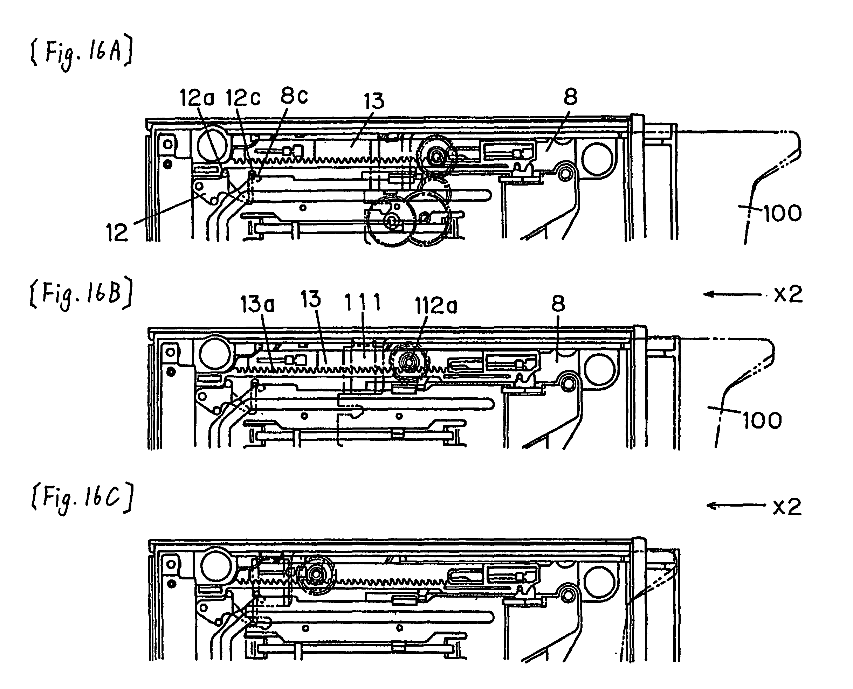

Figures **16A** to **C** through Figures **17A** to **C** show detailed plan views of an upper portion of the disk loading device with no medium mounted in the holder **100**. Figures **16A** to **C** through Figures **17A** to **C** correspond to Figures **13A**, **B** through Figures **15A**, **B**.

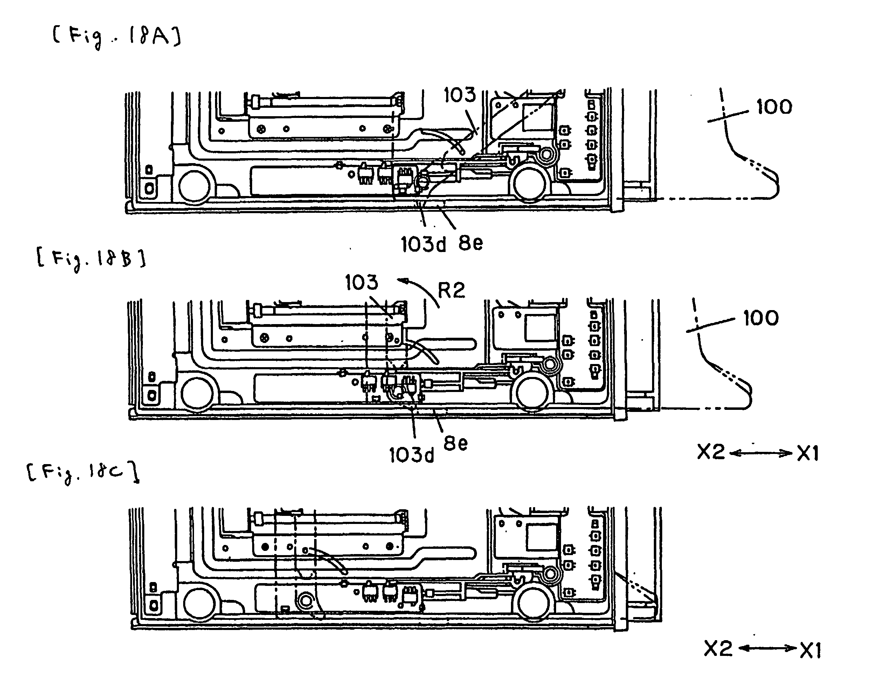

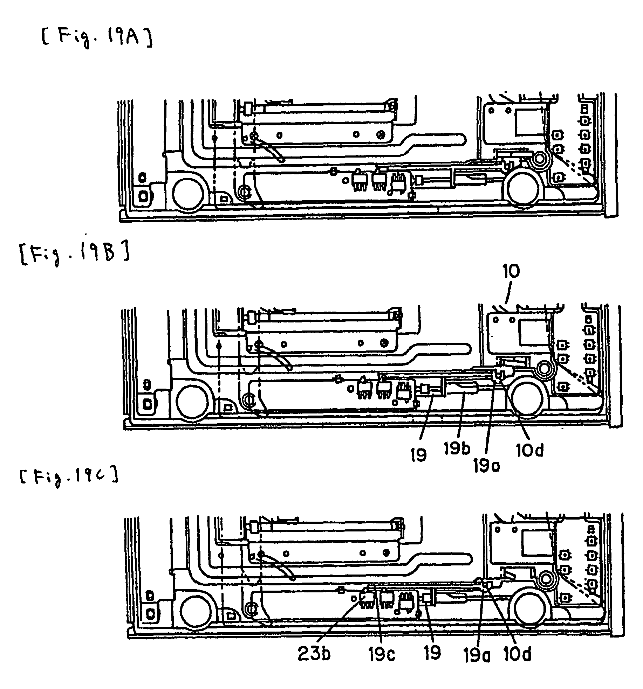

Figures **18A** to **C** through Figures **19A** to **C** show detailed plan views of a lower portion of the disk loading device with no medium mounted in the holder **100**. Figures **18A** to **C** through Figures **19A** to **C** correspond to Figures **13A**, **B** through Figures **15A**, **B**.

Figure **20** shows a side cross-sectional view showing a loading operation with no medium mounted in the holder **100**. Figures **20A** to **D** show chronological operation states.

Figure **13A** shows a state in which the expelling of the holder **100** has been completed. The rib **100a** on the lower face of the holder **100** abuts with the switch **23a** on the driving detection switch circuit board **23** so as to stop precisely at the expelled position of the holder **100**. In this state, either a bare disk or a cartridge will be selectively mounted. In the state of Figure **16A,** the claw **12c** of the clutch **12** engages with the rib **8c** of the base **8** so that a boss **12a** restrains the sliding of the slide rack **13**, whereby the slide rack **13** is affixed to the base **8**. As shown in Figure **18A**, the projection **103d** of the shutter opener **103** is pivotably provided corresponding to the hole **8e** in the side wall of the base **8**. When the cartridge **300** is mounted in the holder **100**, the shutter opener **103** pivots, responsive to the insertion of the cartridge **300** into the holder **100**, so that the shutter **300a** can be opened.

In this state, as shown in Figure **20A**, the chassis **3** is obliquely energized with respect to the base **8**, and the clamp **26** is pressed against the ceiling **25** via the clamp lever **27** owing to the energization force of the clamp pressuring spring **28**. The cartridge detection circuit board **18** is pressed toward the bottom face of the base **8** by the switch circuit substrate support **17**. The disk restraining member **29** is lifted from the base **8** to the central opening of the holder **100** owing to the restoration spring force of the coil spring **29b**.

Figure **13B** shows an accommodation start state of the holder **100**. As shown in Figure **16B**, when a button (not shown) on the panel **21** is pressed and the loading motor **111** in the holder **100** rotates so that the driving force is transmitted to the driving gear **112a** via the gears **112**, the holder **100** begins moving in the **X2** direction in engagement with the rack section **13a** of the slide rack **13** attached to the base **8**. At this time, as shown in Figure **18B**, the projection **103d** of the opener **103** leaves the hole **8e** in the side face of the base **8**. As a result, in the case where a large-size disk **301** is mounted in the holder **100** or where no medium has been mounted, the shutter opener **103** pivots in the **R2** direction up to a position where it does not interfere with the large-size disk **301**. In this state, as shown in Figure **20B**, the holder **100** will be gradually accommodated into the device.

Figure **14A** shows a state in which the holder **100** is further accommodated into the disk loading device.

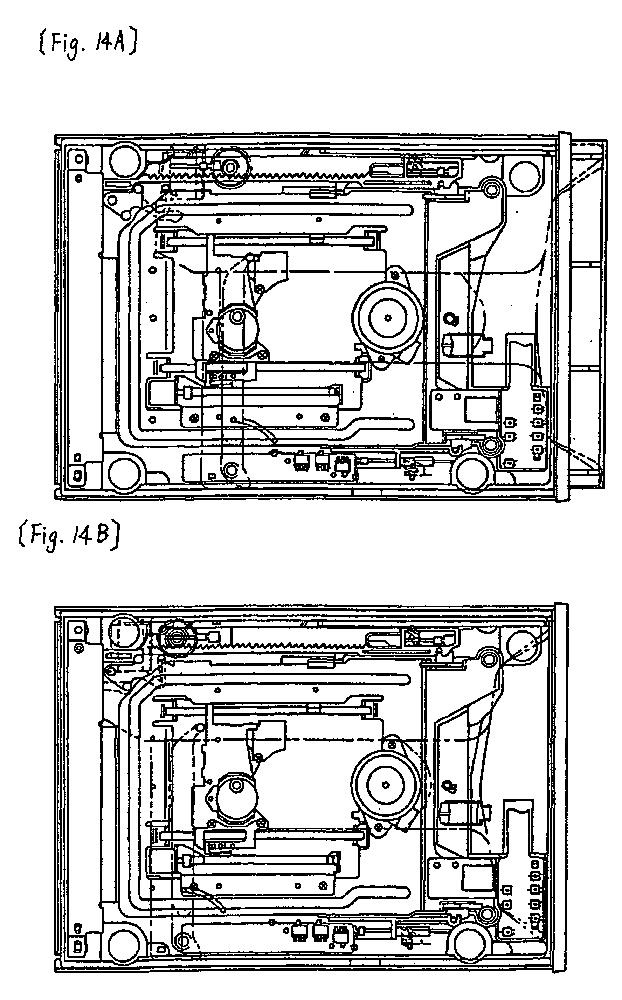

Figure **14B** shows a state in which the accommodation of the holder **100** into the disk loading device has been completed. As shown in Figure **17A**, the rib **100b** on the lower face of the holder **100** abuts with a claw **12d** of the clutch **12** so as to cancel the engagement with the rib **8c** of the base **8**. As a result the slide rack **13** is released from the restraint by the clutch **12** and thereafter becomes capable of sliding in the **X1** direction.

At the same time, as shown in Figure **17A**, a rectangular hole **101b** of the holder **100** engages with a boss **12b** of the clutch **12**. In this state, the rib **101a** of the holder **100** abuts with an end **27a** of the clamp lever **27** as shown in Figure **20C**, so that the clamp lever **27** pivots around the clamp pressuring spring **28**, and the clamp **26** is lowered to a position opposing the turntable **2a**. The roller **29a** of the disk restraining member **29** abuts with the lower face **100d** of the holder **100**, and the disk restraining member **29** is stored into the base **8**.

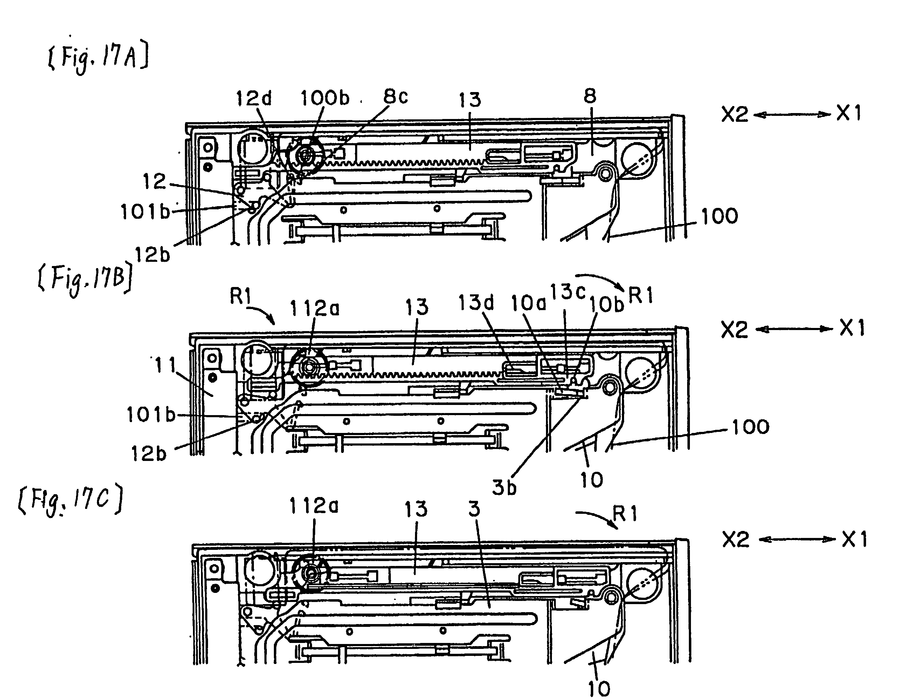

Figure **15A** shows the operation of the slide rack **13** after the accommodation of the holder **100** into the disk loading device is completed. As shown in Figure **17B**, the slide rack **13** slides in the **X1** direction owing to the driving force of the driving gear **112a**, and the boss **12b** of the clutch **12**, which has been engaged with the slide rack **13**, pivots in the **R1** direction so as to restrain the operation of the holder **100** in the **X2** direction within the rectangular hole **101b** of the holder **100**. As a result, the holder **100** is retained in a predetermined position of the base **8**. As the elevation cam **10**, which is engaged with the boss **10b** in a groove **13c** of the slide rack **13**, pivots in the **R1** direction around the axis **8a** of the base **8** concurrently with the movement of the slide rack **13** in the **X1** direction, the chassis **3** abuts with the oblique rib **10a** at the slit **3b** of the chassis **3**, and is gradually lifted up from an oblique state to a substantially horizontal state, in accordance with the pivoting of the elevation cam **10** and against the energization force of the torsion leaf **11**.

Figure **15B** shows a state in which the travel of the slide rack **13** has been completed. As shown in Figure **17C**, the travel of the slide rack **13** in the **X1** direction owing to the driving force of the driving gear **112a** is completed so that the chassis **3** goes on the horizontal plane of the oblique rib **10a** responsive to the pivoting of the elevation cam **10** in the **R1** direction, and the chassis **3** is oriented substantially horizontal. The rib **10a** of the elevation cam **10** abuts with the driving detection switch **23b** at the completion of the loading operation, i.e., when the chassis **3** is oriented substantially horizontal, and the central processing unit (MPU) **34** stops the loading motor **111**. In this state, the chassis **3** is oriented substantially horizontal when the pivoting of the chassis **3** is completed as shown in Figure **20D**. The turntable **2a** on the chassis **3** is lifted to a position opposing the clamp **26**, and the cartridge detection circuit board **18** is lifted from the base **8** to a predetermined position in the holder **100** owing to the restoration force of the switch circuit substrate support **17**, whereby the loading operation is completed.

The expel operation of the holder **100** occurs by the opposite procedure to the above operations. As the loading motor **111** rotates in the opposite direction to the above, the slide rack moves in the **X2** direction so as to pivot the elevation cam **10** in the **R2** direction so that the chassis **3** pivots in the **Z2** direction. Once the travel of the slide rack **13** in the **X2** direction is completed, the holder **100** begins moving in the **X1** direction owing to the driving force of the driving gear **112a**, so that the boss **12b** of the clutch **12**, which has been engaged with the rectangular hole **101b** of the holder **100** to restrain the holder **100**, begins pivoting in the **R2** direction. Due to the pivoting of the clutch **12** in the **R2** direction, the claw **12c** of the clutch **12** engages with the boss **8b** of the bass **8**, so that the slide rack **13** is affixed to the base **8** by the boss **12a** of the clutch **12**. Thereafter, the holder **100** is expelled out of the disk loading device until the rib **100a** on the lower face of the holder **100** abuts with the switch **23a** of the driving detection circuit board **23**, and stops at the completely expelled holder position shown in Figure **13A**.

### (II) Loading operation when a cartridge is mounted in the holder

First, the operation of inserting the cartridge **300** in the withdrawn holder **100** will be described.

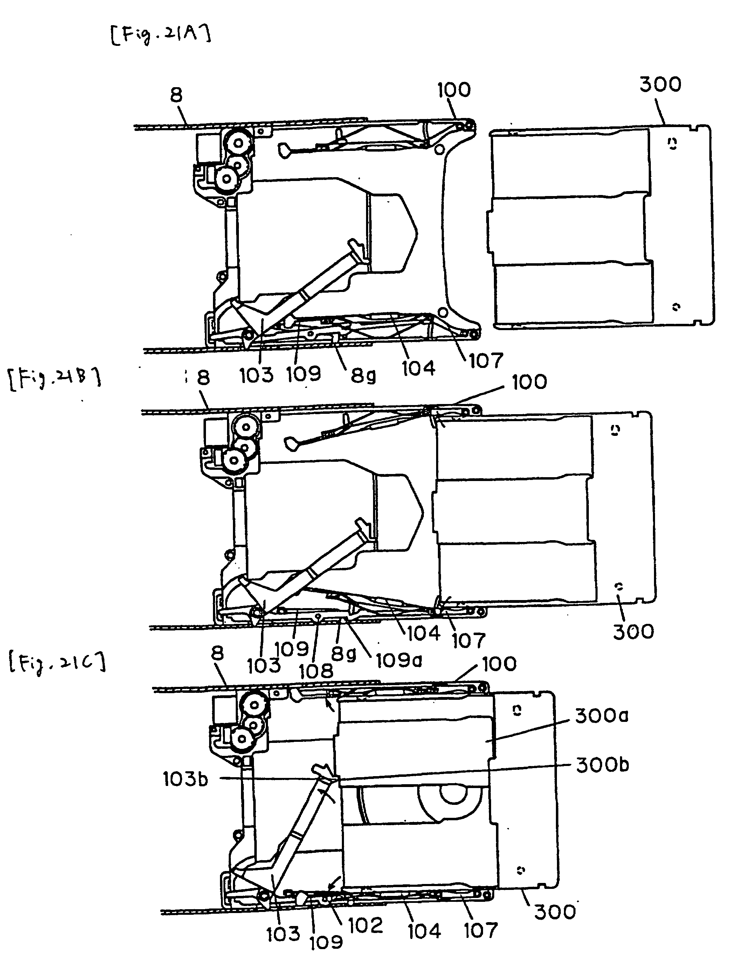

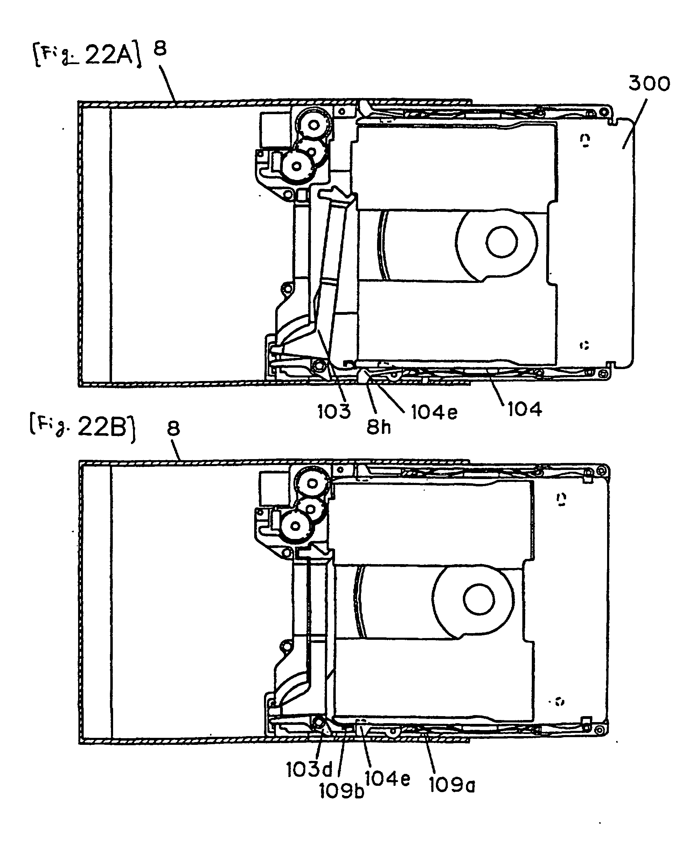

Figures **21A** to **C** through Figures **22A**, **B** show plan views showing the operation of the holder **100** when inserting the cartridge **300** into the holder **100**. Figures **21A** to **C** through Figures **22A**, **B** show chronological operation states.

Figures **23A** to **E** are partially enlarged views showing a cartridge lock mechanism and a holder lock mechanism.

Figures **21A** shows a stand-by state in which the holder **100** has been drawn out.

The disk holders **104** stand by in a position where they are capable of retaining the large-size disk **301**. At this time, the switch **115** is placed in an ON state due to the projection **108b** of the junction plate **108**.

Figure **21B** shows a state in which the cartridge **300** has been slightly inserted. The inlet levers **107** at the ends of the inlet are pushed out with a slight force, and in cooperation, the junction plate **108** and the holder lock **109** pivots outward in an integral manner, so that the hook **109a** of the holder lock **109** engages with a hole **8g** in the side wall of the base **8**, whereby the holder **100** is locked so as not to be drawn into the base **8**. At the same time, the projection **108b** of the junction plate **108** is disengaged from the switch **115**, creating an OFF state (see Figure **23B**).

In Figure **21C**, when the cartridge **300** is further inserted, the disk holders are also outwardly pushed apart. The tip end **103b** of the shutter opener **103** abuts with the recess **300b** of the cartridge shutter **300a**, thereby opening the shutter **300a**.

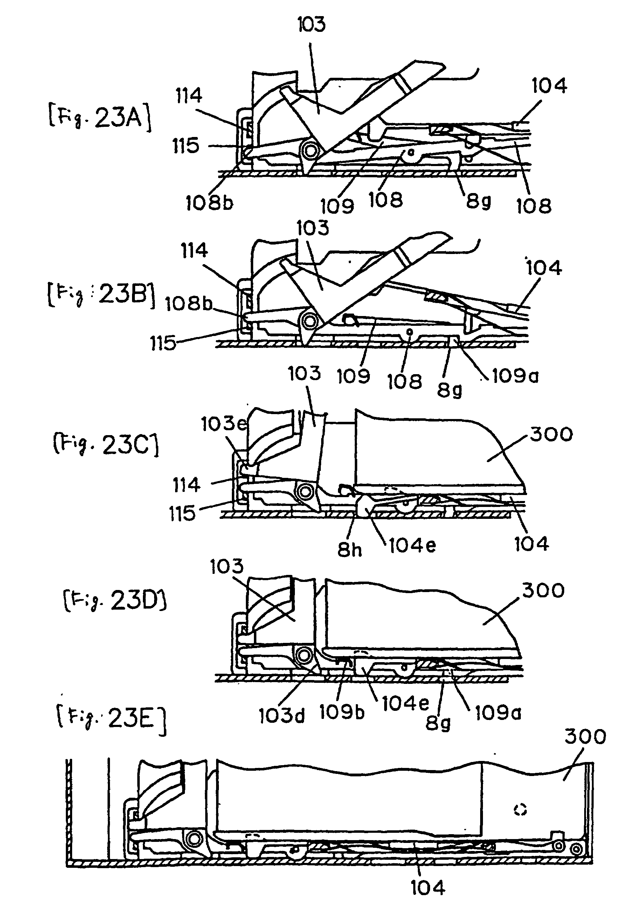

In Figure **22A**, the leading edge of the cartridge **300** reaches the locations of the projections **104e** at the rear ends of the disk holders **104**, push apart the projections **104e**, and enter holes **8h** in the side walls of the base **8**. When the opener projection **103e** reaches the switch **114**, the switch **114** is turned ON, but the holder **100** will not be driven because the switch **115** is in an OFF state (see Figure **23C**).

In Figure **22B**, the leading edge of the cartridge **300** pushes out the elevated portion **109b** of the holder lock **109**, thereby pivoting the holder lock **109**, so that the hook **109a** is accommodated within the holder **100**. When the cartridge **300** is completely inserted, the projections **104e** enter the notches **300o** of the cartridge **300** so as to return to their original positions, and the locking of the holder **100** is canceled (see Figure **23D**).

At this time, the shutter opener **103** has pivoted to the rear of the holder **100**, and the projection **103d** is accommodated within the holder **100**.

In this state, with a further pushing or a press on the bottom on the front face of the device, the holder **100** is pulled into the device (see Figure **23E**).

Once the holder **100** is pulled into the device, the cartridge lock **110** can no longer pivot outward because there are no more holes in the side wall of the base **8**. As a result, the cartridge **300** will be retained without coming loose.

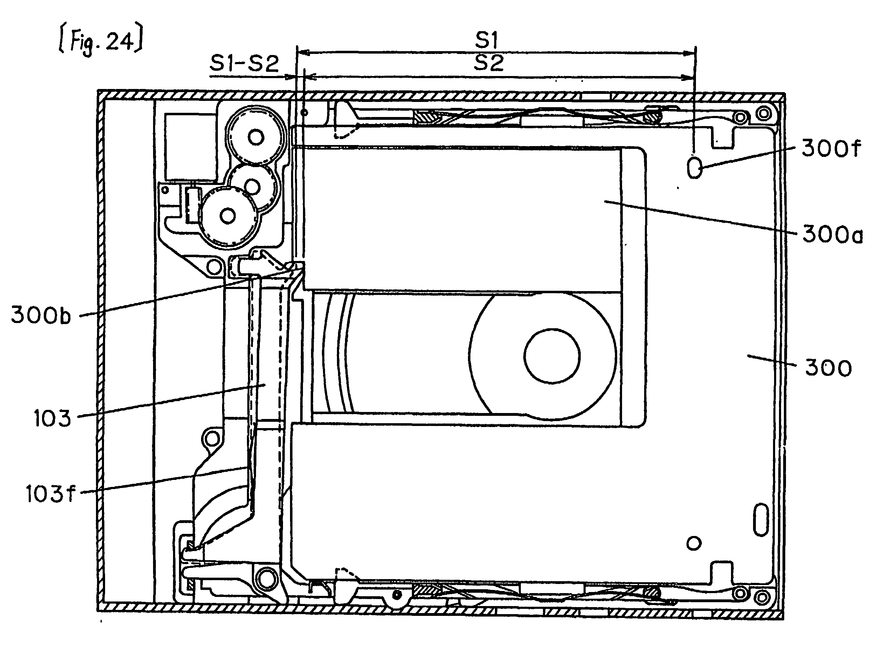

Figure **24** is a plan view of the holder when a cartridge having a differently dimensioned shutter front end is mounted.

As shown in Figure **24**, as opposed to a cartridge whose dimension from the positioning hole **300f** to the recess **300b** in the front end of the shutter **300a** measures **S1**, if a cartridge with a dimension **S2** which is shorter than **S1** is mounted, there is a dimensional difference of **S1 - S2**, so that the shutter opener **103** stops without pivoting to the final end. At this time, the opener plate spring **103f** abuts with the back face of the holder **100**, thereby providing energization force for the opener **103** toward the holder inlet. As a result, the shutter opener **103** is prevented from moving to the final end position due to vibration to be disengaged from the shutter **300a**.

Hereinafter, the loading operation will be described in a manner similar to the aforementioned case where no medium is mounted.

Figures **25A** to **D** are side cross-sectional views showing a loading operation when the cartridge **300** is mounted in the holder **100**. Figures **25A** to **D** show chronological operation states.

When the cartridge **300** is mounted in the holder **100**, as shown in Figure **25A**, the turntable **2a** is lowered because the chassis **3** is obliquely energized with respect to the base **8**, and the clamp **26** is pressed against the ceiling **25** via the clamp lever **27** owing to the energization force of the clamp pressuring spring **28**. Therefore, when the cartridge **300** is mounted in the holder **100**, the element **300d** which is exposed through the opening of the shutter **300b**, the turntable **2a**, and the clamp **26** do not contact one another. Moreover, as the shutter **300a** of the cartridge **300** is opened, the disk restraining member **29** contacts the disk **300e** to restrain the postures of the chassis **3** obliquely energized with respect to the base **8** and the disk **300e** so that they are oriented substantially parallel, thereby preventing the disk **300e** from contacting the turntable **2a** on the chassis **3**.

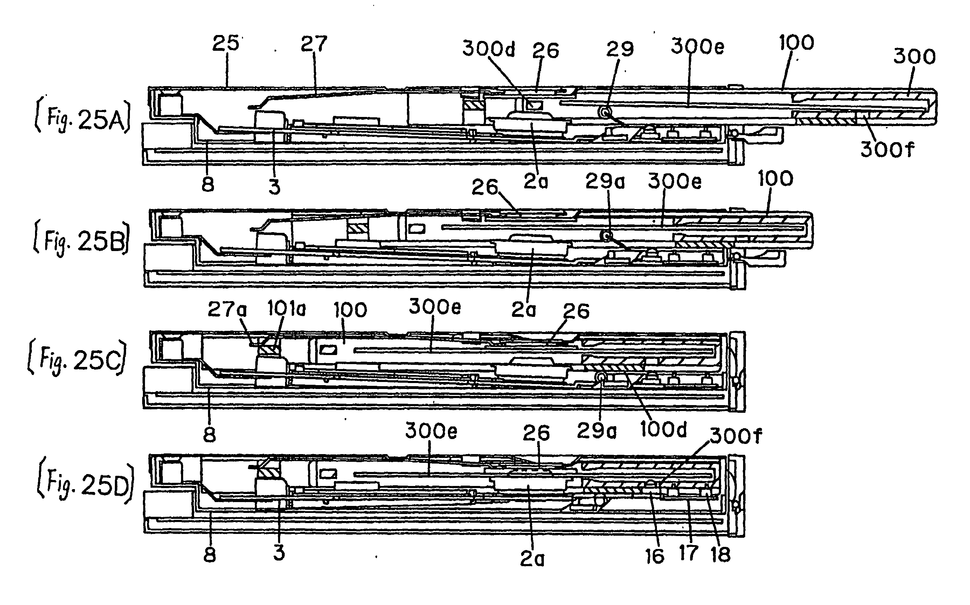

When a loading operation is started by pressing the eject button (not shown) as in the aforementioned case where no medium is mounted, the holder **100** is gradually accommodated into the device as shown in Figure **25B**, but the disk **300e** within the cartridge **300**, the turntable **2a**, and the clamp **26** do not contact one another. Although the disk **300e** and the roller **29a** of the disk restraining member **29** contact each other, the disk **300e** is prevented from being damaged because the roller **29a** has lower hardness than the substrate material of the disk **300e** and because it rotates.

As shown in Figure **25C**, once the accommodation of the holder **100** into the disk loading device is completed, the roller **29a** of the disk restraining member **29** abuts with the lower face **100d** of the holder **100** so that the disk restraining member **29** is stored into the base **8**. The rib **101a** of the holder **100** and the end **27a** of the clamp lever **27** abut with each other so that the clamp lever **27** pivots around the clamp pressuring spring **28**, the clamp **26** is lowered to a position opposing the turntable **2a**, and the clamp **26** stands by over the disk **300e**.

As shown in Figure **25D**, when the pivoting of the chassis **3** is completed, the chassis **3** is oriented substantially horizontal, and the turntable **2a** on the chassis **3** is lifted so as to be engaged with the central hole of the disk **300e**. The disk **300e** is mounted upon the turntable **2a** owing to the attraction force between the clamp **26** and the turntable **2a**. The positioning hole **300f** of the cartridge **300** and the pin **16** on the chassis **3** engage with each other so that accurate positioning of the disk **300e** and the cartridge **300** upon the chassis **3** can be achieved.

At the same time, the cartridge detection circuit board **18** is lifted from the base **8** up to a predetermined position within the holder **100** owing to the restoration force of the switch circuit substrate support **17**, and the presence/absence of a detection hole (not shown) provided on the lower face of the cartridge **300** is detected, whereby the loading operation is completed.

The expel operation of the holder **100** occurs by the opposite procedure to the above operations. When the cartridge **300** is taken out from the holder **100**, it does not interfere with the shutter **300a** of the cartridge **300** because of the conical shape of the roller **29a** of the disk restraining member **29**.

As seen from Figures **25A** to **D**, the shutter **300a** of the cartridge **300** is opened, and thereafter only the disk **300e** within the cartridge **300** passes between the turntable **2a** and the clamp **26**, so that the distance between the turntable **2a** and the clamp **26** only needs to be slightly wider than the thickness **m** of the disk **300e** shown in Figure **3F**.

Since the clamp lever **27** of the clamp **26** and the like are disposed within the bounds of the opening of the cartridge **300**, the clamp lever **27** and the like only need to be provided so as not to interfere with the disk **300e** within the opening of the cartridge **300**, rather than the housing of the cartridge **300**.

In other words, in accordance with the disk loading device according to the present example, the shutter **300a** of the cartridge **300** is opened before the cartridge **300** is introduced to the rear of the holder **100**. Therefore, the entire housing of the cartridge **300** does not interfere with the internal mechanism of the disk loading device. Within the bounds of the opening of the cartridge **300**, only the disk **300e** may interfere. As a result, the internal space of the disk loading device can be effectively utilized to the extent that it does not interfere with the disk **300e** within the opening of the cartridge **300**, thereby making for a thinner configuration of the device.

On the contrary, conventional devices first introduce a cartridge to the rear of the holder and then open the shutter of the cartridge. Therefore, the entire housing of the cartridge may interfere with the internal mechanism of the disk loading device, resulting in the device having a large thickness. For example, the distance between the turntable **2a** and the clamp **26** is wider than the thickness **M** of the housing of the cartridge **300** shown in Figure **3E**, resulting in the device having a large thickness.

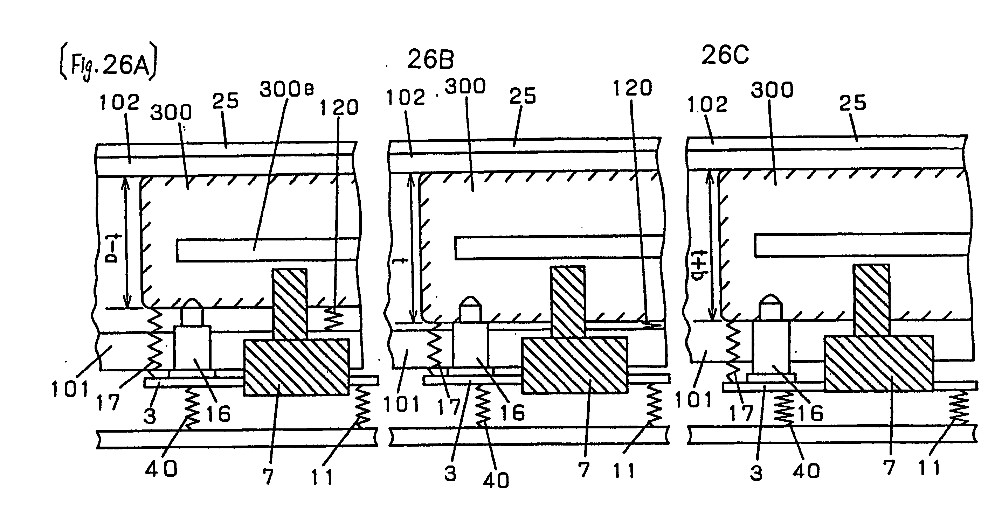

Figures **26A** to **C** show a thickness compensating mechanism where the thickness **t** of the cartridge **300** varies within its allowable error, i.e., from **t-a** to **t+b**.

Figure **26A** shows the case where the cartridge has a thickness **t-a**. If the cartridge **300** is inserted into the space within the holder **100** constituted by the holder case **101** and the holder cover **102**, a space is created between the holder case **101** and the cartridge **300** because the cartridge thickness is the smallest within its allowable error range. The cartridge **300** is pressed against the holder cover **102** owing to the energization force of the cartridge energizing spring **120** provided on the holder case **101** and the energization force of the switch circuit substrate support **17** provided on the chassis **3**. The holder **100** abuts with the lower portion of the positioning pin **16** provided on the chassis **3**, and the holder case **102** is spring-energized by the head unit energization spring **40** and the torsion leaf **11** for energizing the chassis **3** so as to contact the ceiling. Thus, the cartridge **300** and the holder **100** are spring-energized against the ceiling **25** as a reference point, while retaining the redundant space due to the dimensional difference within the device.

Figure **26B** shows the case where the cartridge has a standard thickness **t**. If the cartridge **300** is inserted into the space within the holder **100**, a space emerges between the holder case **101** and the cartridge **300**. The cartridge **300** is pressed against the holder cover **102** owing to the energization force of the holder energizing spring **120** provided on the holder case **101**, the energization force of the switch circuit substrate support **17** provided on the chassis **3**, and the positioning pin **16** provided on the chassis **3**. The holder **100** abuts with the lower portion of the positioning pin **16** provided on the chassis **3**, and the holder case **102** is spring-energized by the head unit energization spring **40** and the torsion leaf **11** for spring-energizing the chassis **3** so as to contact the ceiling. Thus, the cartridge **300** and the holder **100** are spring-energized against the ceiling **25** as a reference point, while retaining the redundant space due to the dimensional difference within the device.

Figure **26C** shows the case where the cartridge has a thickness **t+b**. If the cartridge **300** is inserted into the space within the holder **100**, the space between the holder case **101** and the cartridge **300** substantially eliminated. The cartridge **300** is pressed against the holder cover **102** owing to the energization force of the holder energizing spring **120** provided on the holder case **101**, the energization force of the switch circuit substrate support **17** provided on the chassis **3**, and the positioning pin **16** provided on the chassis **3**. The holder **100** does not abut with the lower portion of the positioning pin **16** provided on the chassis **3**, and the holder case **102** is spring-energized by the head unit energization spring **40** and the torsion leaf **11** for spring energizing the chassis **3** so as to contact the ceiling. Thus, the cartridge **300** and the holder **100** are spring-energized against the ceiling **25** as a reference point.

Since the thickness difference of the cartridge is compensated for by the aforementioned constitution, it is unnecessary to incorporate a dimension for retreating the cartridge energization spring in the device's height dimension, which would conventionally have been employed. As a result, the device can be realized in a thin configuration. In any of the cases of Figures **26A** to **C**, the predetermined positions of the disk **300e** within the cartridge **300** and the optical head **7** are maintained.

### (III) Loading operation when large-size disk is mounted in the holder

Next, the operation of the holder **100** in the case of inserting the large-size disk **301** in the withdrawn holder **100** will be described.

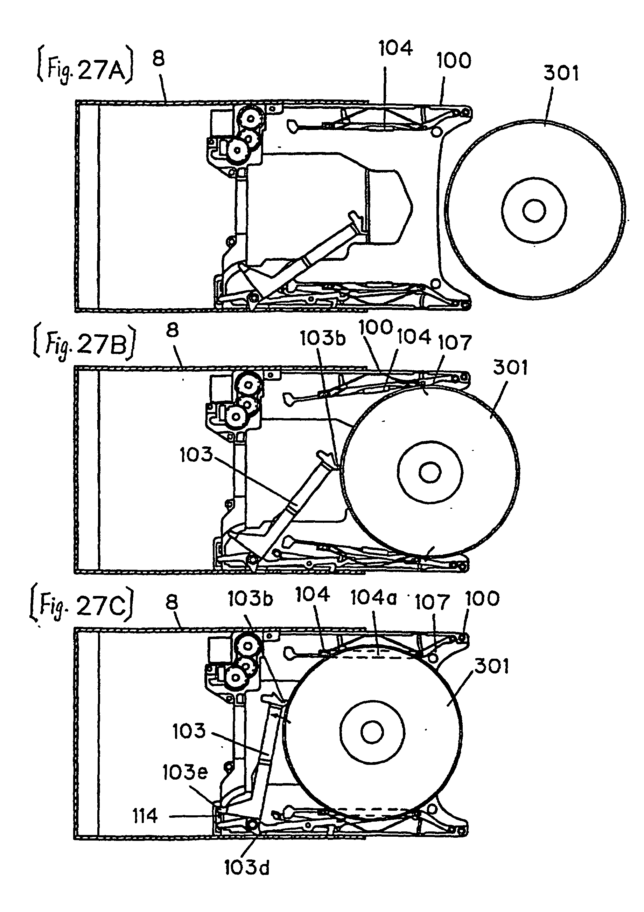

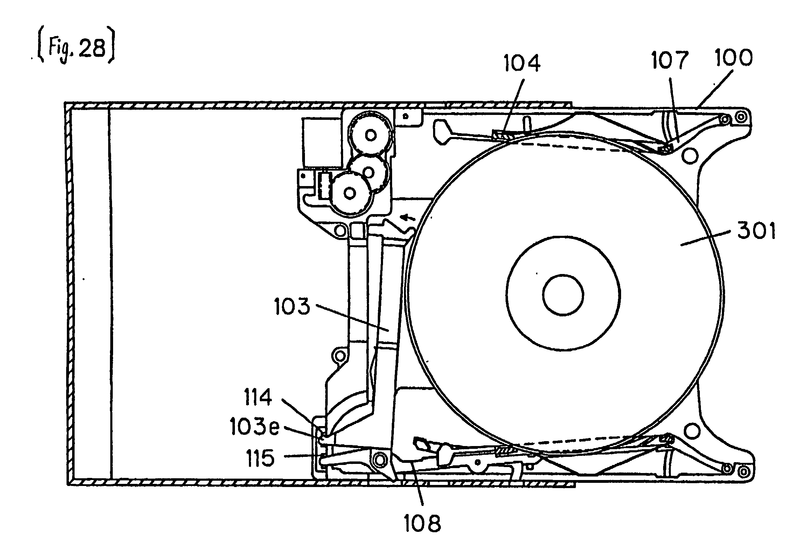

Figures **27A** to **C** and **28** are plan views showing the operation of the holder **100** in the case of inserting the large-size disk **301** in the withdrawn holder **100**. Figures **27A** to **C** and Figure **28** show chronological operation states.

Figures **27A** shows a stand-by state in which the holder **100** has been drawn out.

The disk holders **104** stand so as to be capable of retaining the large-size disk **301**.

Figure **27B** shows a state in which the large-size disk **301** has been inserted so as to push apart the inlet levers **107**. The tip end **103b** of the shutter opener **103** abuts with an end face of the large-size disk **301** and is driven away to the rear.

With reference to Figure **27C**, the large-size disk **301**, having overridden the inlet levers **107**, enters the slits **104a** of the disk holders **104**, so that the inlet levers **107** and the disk holders **104** return to their original positions.

The shutter opener **103** is in a position where its tip end **103b** abuts with the outer periphery of the large-size disk **301**, and the projection **103d** is outside the holder **100**. At this time, the switch **114** is in an OFF state.

With reference to Figure **28**, the large-size disk **301** is pushed slightly more inward, and the shutter opener **103** further pivots to turn the switch **114** ON. At this time, the inlet levers **107** and the junction plates **108** are in an initial state so that the switch **115** is ON. Therefore, the holder **100** begins to be drawn in.

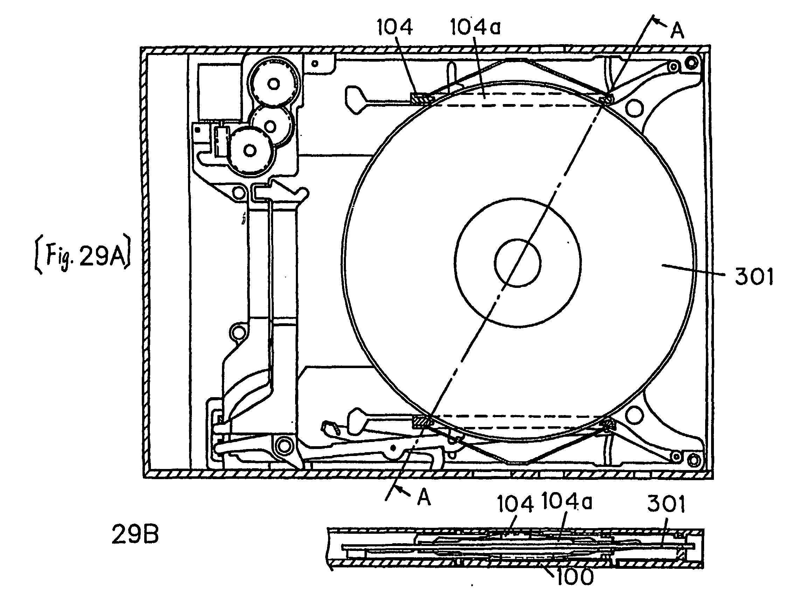

Figure **29A** is a plan view showing a state in which the large-size disk **301** is retained. Figure **29B** is a side view of the disk holder **104**, the inlet lever **107**, and the large-size disk **301**. As shown, the large-size disk **301** is retained within the slit **104a** of the disk holder **104** with a interspace along the radius direction and the thickness direction.

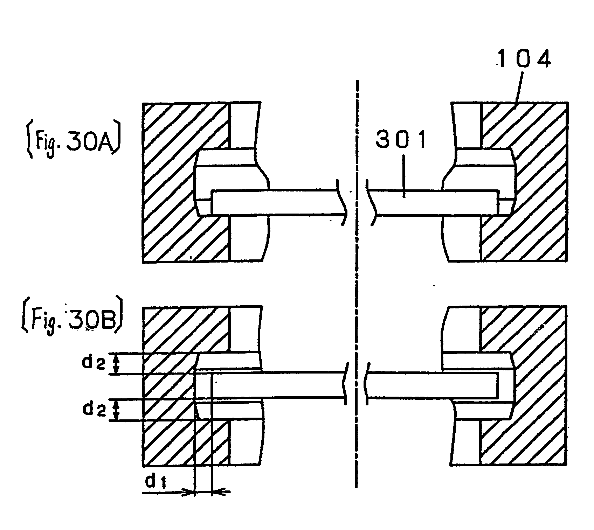

Figures **30** show a cross section **A-A** in Figures **29A** and **B,** Figure **30A** showing a state during holder conveyance, and Figure **30B** showing a loading completed state. In the case of horizontal installation, as shown in Figure **30A**, the large-size disk **301** is on the lower end of the slits **104a** during holder conveyance. Once the loading is completed so that the disk is lifted by the turntable, as shown in Figure **30B**, a dimension **d1** is obtained along the radial direction of the large-size disk **301**, and a dimension **d2** is obtained along the vertical direction of the large-size disk **301**. The large-size disk **301** is driven to rotate within this interspace.

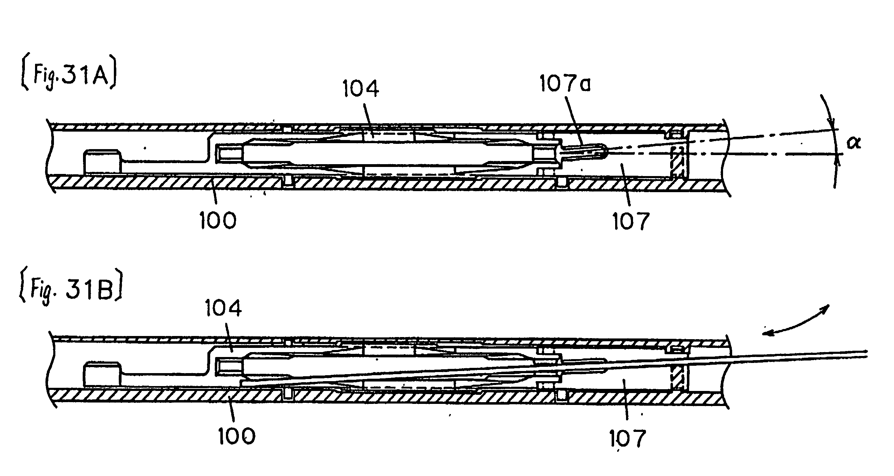

Figure **31A** is a side view of the disk holder **104**, and the inlet lever **107**. Figure **31B** is a side view showing how the large-size disk **301** is inserted. As shown in Figures **31A** and **B**, a groove **107a** for guiding the large-size disk **301** is provided in the inlet levers **107** so as to constitute an angle α with respect to the bottom face of the holder **100**. As a result, when the large-size disk **301** is inserted or taken out, the large-size disk **301** is guided in an obliquely upward direction, thereby avoiding abutment between the disk end face and the clamp section, while improving the operation feeling.

Hereinafter, the loading operation will be described in a manner similar to the aforementioned case where no medium is mounted.

Figures **32A** to **D** are side cross-sectional views showing a loading operation in the case where the large-size disk **301** is mounted in the holder **100**. Figures **32A** to **D** show chronological operation states.

When the large-size disk **301** is mounted within the holder **100**, as shown in Figure **32A**, the turntable **2a** is lowered because the chassis **3** is obliquely energized with respect to the base **8**, and the clamp **26** is pressed against the ceiling **25** via the clamp lever **27** owing to the energization force of the clamp pressuring spring **28**. Therefore, the large-size disk **301** having mounted in the holder **100** and the clamp **26** do not contact each another. Moreover, the disk restraining member **29** contacts the large-size disk **301** to restrain the postures of the chassis **3** obliquely energized with respect to the base **8** and the large-size disk **301** so that they are oriented substantially parallel, thereby preventing the large-size disk **301** from contacting the turntable **2a** on the chassis **3**.

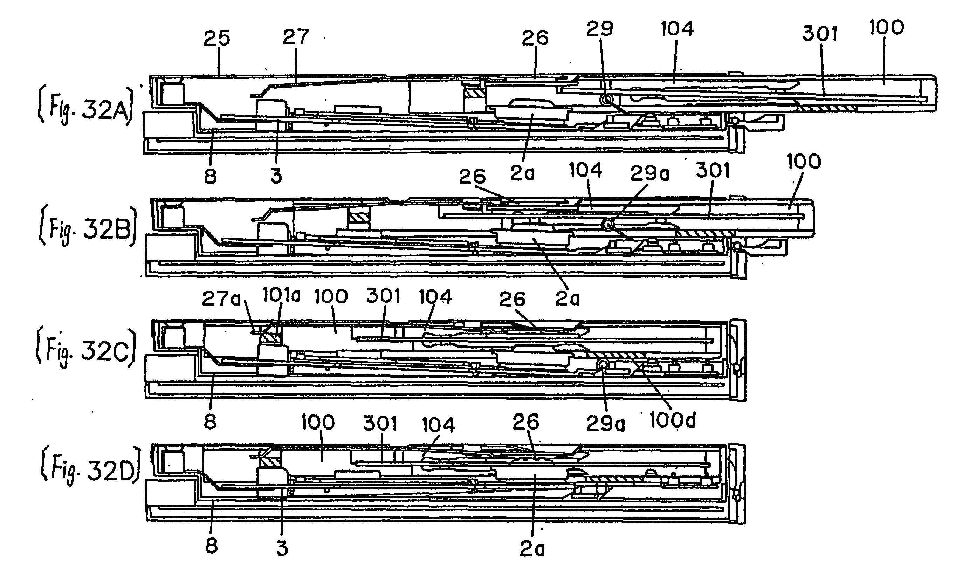

When a loading operation is started by pressing the eject button (not shown) as in the aforementioned case where no medium is mounted, the holder **100** is gradually accommodated into the device as shown in Figure **32B**, but the large-size disk **301**, the turntable **2a**, and the clamp **26** do not contact one another. Although the large-size disk **301** and the roller **29a** of the disk restraining member **29** contact each other, the large-size disk **301** is prevented from being damaged because the roller **29a** has lower hardness than the substrate material of the large-size disk **301** and because it rotates. At this time, as shown in Figure **18B**, the projection of the shutter opener **103** leaves the hole **8e** in the side face of the base **8**, and the shutter opener **103** pivots in the **R2** direction up to a position where it does not retain the large-size disk **301**. Therefore, the shutter opener **103** and the large-size disk **301** do not engage with each other.

As shown in Figure **32C**, once the accommodation of the holder **100** into the disk loading device is completed, the roller **29a** of the disk restraining member **29** abuts with the lower face **100d** of the holder **100** so that the disk restraining member **29** is stored into the base **8**. The rib **101a** of the holder **100** and the end **27a** of the clamp lever **27** abut with each other so that the clamp lever **27** pivots around the clamp pressuring spring **28**, the clamp **26** is lowered to a position opposing the turntable **2a**, and the clamp **26** stands by over the large-size disk **301**.

As shown in Figure **32D**, when the pivoting of the chassis **3** is completed, the chassis **3** is oriented substantially horizontal, and the turntable **2a** on the chassis **3** is lifted so as to be engaged with the central hole of the large-size disk **301**, absent the restraint on the large-size disk **301** by the shutter opener **103** or the disk holders **104**. The large-size disk **301** is mounted upon the turntable **2a** owing to the attraction force between the clamp **26** and the turntable **2a**, whereby the loading operation is completed.

The expel operation of the holder **100** occurs by the opposite procedure to the above operations.

### (IV) Medium take-out operation in an unpowered state

The loading operation in a powered state have been hitherto described. Next, an operation for taking out a medium which is stored in the disk loading device during an unpowered state will be described.

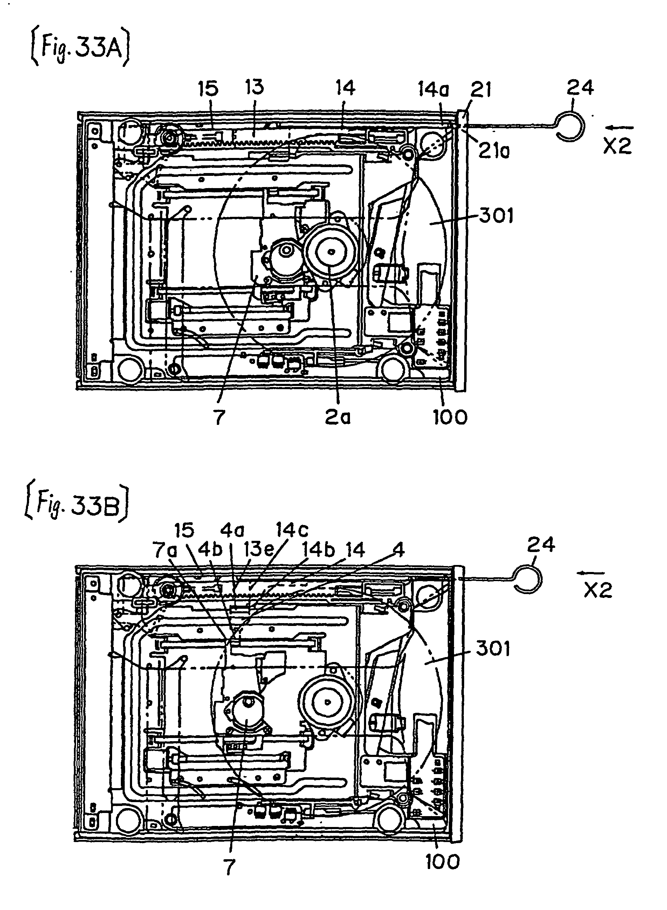

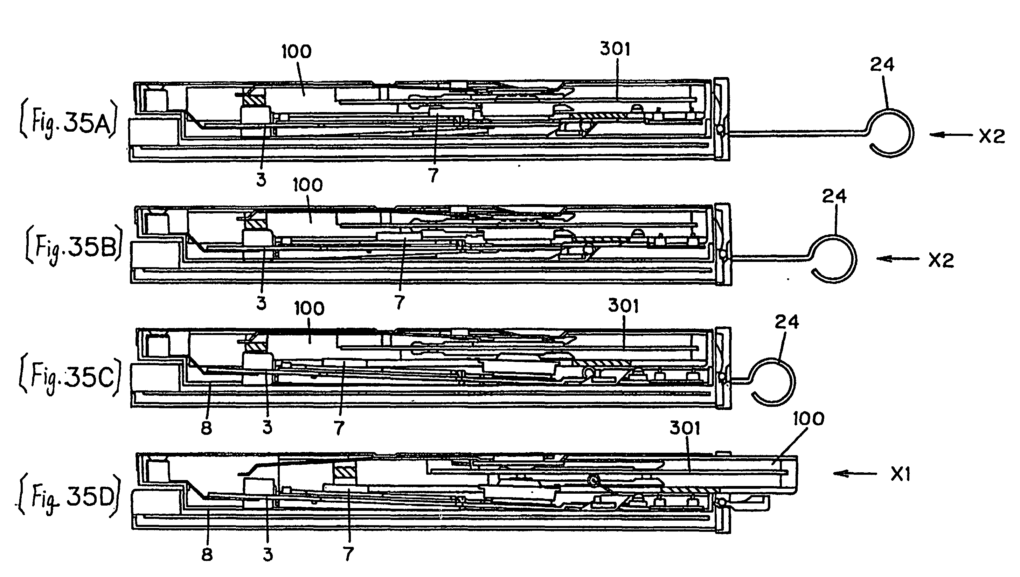

Figures **33A**, **B** through Figures **34A**, **B** are plan views showing an operation of taking out the large-size disk **301** stored in the disk loading device during an unpowered state. Figures **35A** to **D** are side cross-sectional views thereof.

Figures **36A** to **D** are side cross-sectional views showing how the claw **14a** of the forced ejection lever **14** is engaged with the engagement section **100c** of the holder **100** responsive to the insertion of an eject pin **24**.

As shown in Figure **33A**, the eject pin **24** is inserted into the disk loading device through the forced ejection hole **21a** in the panel **21**. The eject pin **24** engages with the end portion **14a** of the forced ejection lever **14**. The forced ejection lever **14** is mounted between the slide rack **13** and the base **8** in **X1-X2** direction, and slightly energized in the **X1** direction by the forced ejection spring **15**. The description will illustrate a case where the optical head **7** is located at the innermost portion of the large-size disk **301**, which portion is the closest to the turntable **2a**. In this state, as shown in Figure **35A**, the chassis **3** is substantially horizontal. The forced ejection spring **15** is mounted as shown in Figure **36A**; the engagement claw **14a** of the forced ejection spring lever 14 and the engagement section **100c** of the holder **100** are detached from each other.

As shown in Figure **33B**, when the eject pin **24** is further inserted into the disk loading device (in the **X2** direction) while compressing the ejection spring **15**, the forced ejection lever **14** is pushed in the **X2** direction, and a rib **14b** of the forced ejection lever **14** abuts with an end portion **4a** of the head transfer lever **4**, which is mounted to the chassis **3** so as to be slidable in the **X1-X2** direction. Eventually, an end portion **7a** of the optical head **7** abuts with an end portion **4b** of the head transfer lever **4**, so as to be transferred in the **X2** direction. In this state, as shown in Figure **35B**, the end face **13e** of the slide rack **13** is yet to abut with and the end face **14c** of the forced ejection lever. Therefore, only the optical head **7** moves in the **X2** direction, and the chassis **3** maintains its substantially horizontal state.

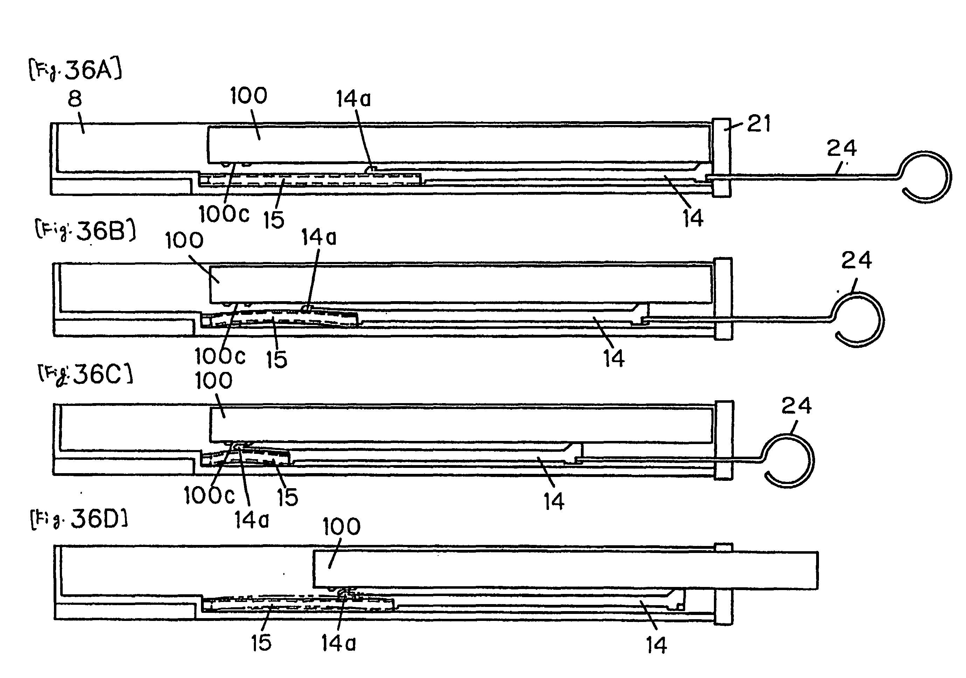

As shown in Figure **36B**, the forced ejection lever **15** is compressed so as to store force for expelling the holder, and deforms the holder engagement claw **14a** of the forced ejection lever **14** in a direction of approaching the holder **100** because the holder engagement claw **14a** of the forced ejection lever **14** has an aperture which allows deformation only in the direction of approaching the engagement section **100c** of the holder.

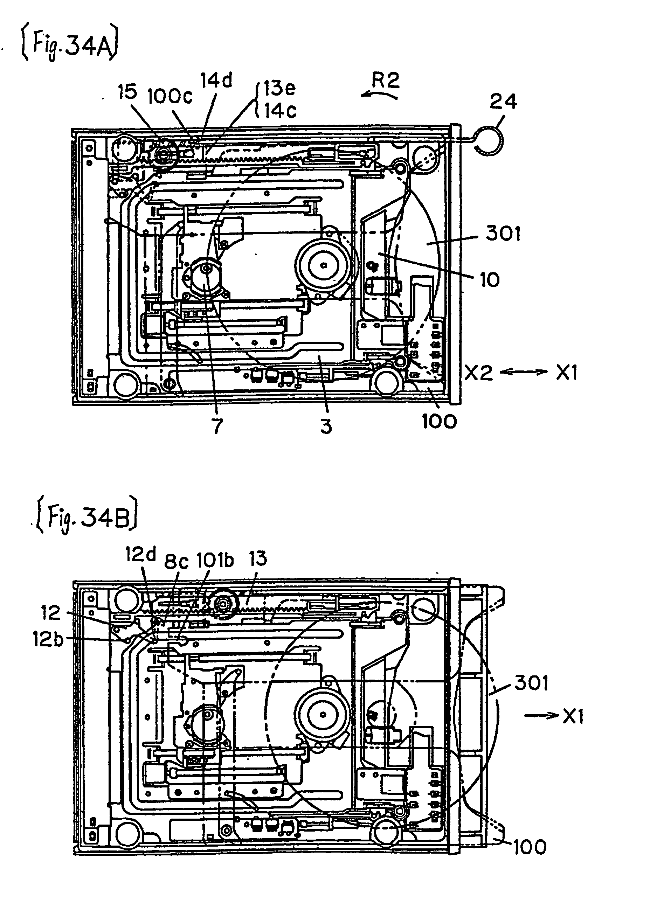

As the forced ejection pin **24** is further inserted, as shown in Figure **34A**, the optical head **7** is transferred to the outermost periphery of the large-size disk **301**, and the claw **14a** of the forced ejection lever **14** engages with the engagement section **100c** of the holder **100**. At the same time, the end face **13e** of the slide rack **13** and the end face **14c** of the forced ejection lever abut with each other. Responsive to the travel of the slide rack **13** in the **X2** direction, the elevation cam **10** pivots in the **R2** direction, so that the chassis **3** pivots from the substantially horizontal state to the oblique state. In this state, as shown in Figure **35C**, the completion of the tilting of the chassis **3** may be designed so as to occur after the optical head **7** has been retracted to the outermost periphery; as a result, the lower face of the optical head **7** will not stick out from the lower face of the base **8**, so that the disk loading device can attain a thin configuration.

As shown in Figures **34A** and **36C**, the insertion stroke of the forced ejection pin **24** may be designed so as to come to an end where the claw **14a** of the forced ejection lever **14** engages with the engagement section **100c** of the holder **100**, so that the insertion of the forced ejection pin **24** in the **X2** direction is stopped. As a result, the holder **100** begins traveling in the **X1** direction owing to the restoration force of the compressed forced ejection spring **15**.

By drawing out the forced ejection pin **24** from the disk loading device in this state, as shown in Figure **34B**, the engagement between the rectangular hole **101b** of the holder **100** and boss **12b** of the clutch **12** is canceled responsive to the travel of the holder **100**, so that the holder **100** becomes capable of moving in the **X1** direction, and the claw **12d** of the clutch **12** engages with the rib **8c** of the base **8** so as to confine the slide rack **13**. In this state, as shown in Figure **35D**, the holder **100** is slightly withdrawn from the disk loading device, so that the large-size disk **301** stored in the holder **100** can be taken out by manually drawing out the holder section in the **X1** direction up to a completely expelled holder position. Moreover, by pulling out the forced ejection pin **24**, as shown in Figure **36D**, the holder **100** is ejected outside the device owing to the energization force of the forced ejection spring **15**. When the holder **100** has been ejected to a predetermined position, the engagement between the claw **14a** of the forced ejection lever **14** with the engagement section **100c** of the holder **100** due to the forced ejection spring **15** is canceled.

The above description illustrates the case where the optical head **7** is at the innermost position of the large-size disk **301**. However, it will be appreciated that, also in the case where the optical head **7** stands by in any position, the optical head **7** is transferred to the outermost position before the tilting operation of the chassis **3** is completed.

Although the take-out operation for the large-size disk **301** in an unpowered state is described above, a cartridge **300** and a small-size disk **302** can be taken out in a similar manner.

When the device is powered again, the central processing unit (MPU) **34** may ensure that the holder **100** is accommodated and the optical head **7** is moved to the innermost position by the feed motor **5** after completion of the loading operation. As a result, the head transfer lever **4** is moved to a predetermined position at the innermost periphery by the optical head **7**, returning to the initial state shown in Figure **33A**, so that it will not interfere with the operation of the optical head **7**.

### (V) Loading operation in the case where an adapter is mounted in the holder

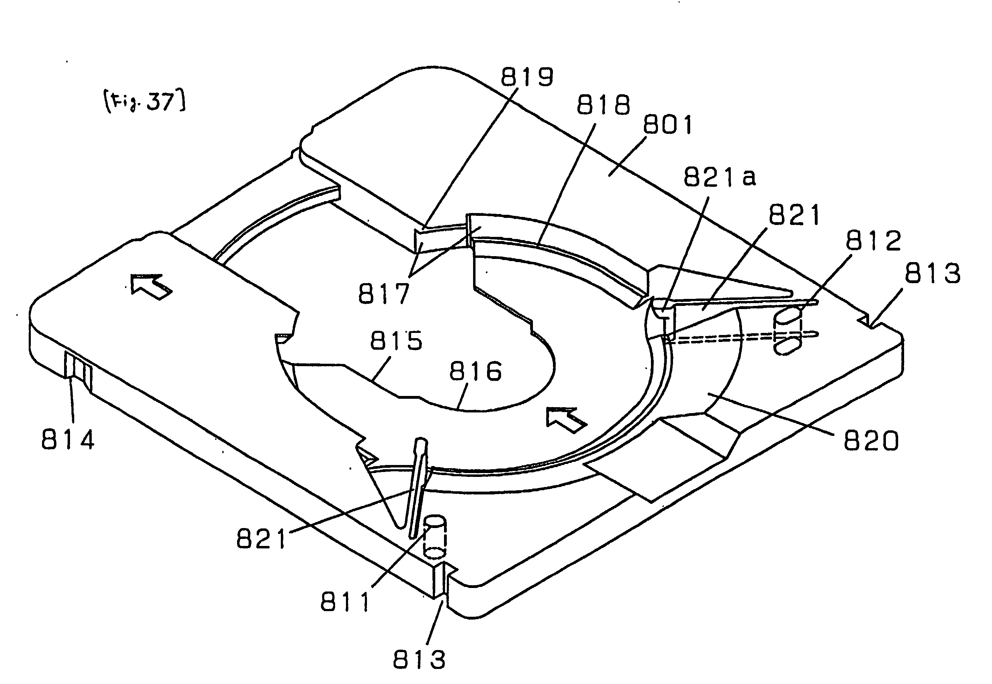

Figure **37** is a perspective view showing a first example of an adapter according to the present invention.

With reference to Figure **37**, reference numeral **801** denotes an adapter having the same width, length, thickness dimensions and the same positions and dimensions of alignment holes **811** and **812** as those of the cartridge **300**. The adapter can be mounted in a disk loading device which is compatible with the disk cartridge **300**. Reference numeral **813** denotes grips for retention by an automatic exchanger, and **814** denotes a notched portion, which have configurations and dimensions that are also compatible with the cartridge **300**. Thus, it allows for use with an automatic exchanger, and inadvertent insertion is prevented based on the notched portions.

Reference numerals **815** and **816** denote openings for allowing the entrance of the optical head **7** and the turntable **2**, respectively.

Reference numeral **817** denotes a cylindrical face which is concentric with the small-size disk **302** and which is slightly larger than the outer diameter of the small-size disk **302** as well as a vertical face which is parallel to the direction in which the small-size disk **302** is to be inserted. Reference numeral **818** denotes a projection piece for restraining the lower face of the small-size disk **302**; and **819** denotes a projection piece for restraining the upper face of the small-size disk **302**. Thus, a retention section is constructed for retaining the small-size disk **302** while leaving some interspace with its outer periphery and thickness.

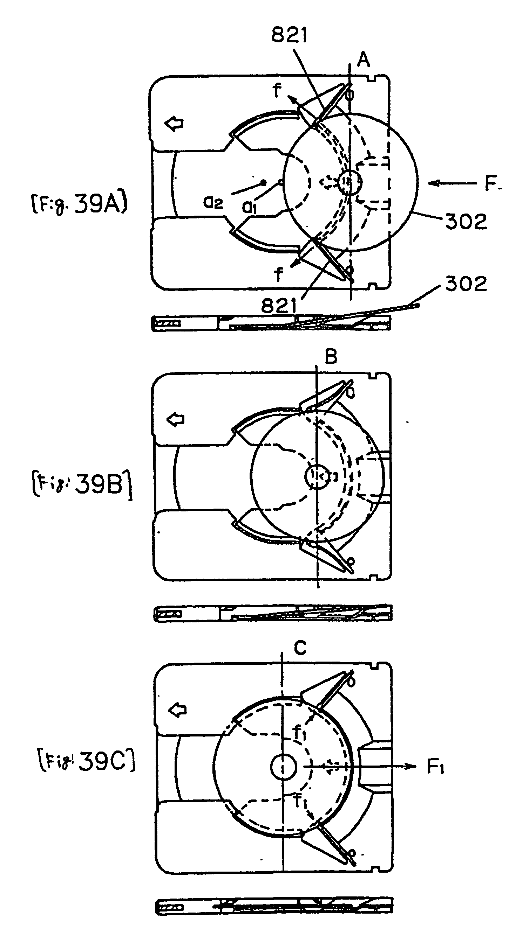

Reference numeral **820** denotes a disk insertion section, constituted by a conical face provided at the trailing end on a central line along the direction in which the adapter body is inserted into the disk loading device, such that the ridge between the upper face of the adapter and the conical face is larger than the outer contour of the small-size disk **302**. As shown in Figure **39A**, the small-size disk **302** is stored into the adapter **801** while being tilted.

Reference numeral **821** denotes a pair of disk guiding members as cantilever plates which are perpendicular to the disk surface of the small-size disk **302**. The intersection **a2** between the lever extension of the disk guiding members **821** and the central line along the insertion direction of the adapter is located forward with respect to a center **a1** of the disk retention position along the insertion direction, so that, when the small-size disk **302** is inserted, the small-size disk **302** is inserted while pushing apart the disk guiding members **821**. After the insertion of the small-size disk **302** is completed, the small-size disk **302** is retained with an interspace between the tip ends of the disk guiding members **821** and the outer periphery of the small-size disk **302**. A projection piece **821a** for restraining the upper face of the small-size disk **302** is provided.

Figures **39A**, **B**, and **C** show the manner in which the small-size disk **302** is inserted. Figure **39A** shows a state in which the outer periphery of the small-size disk **302** has contacted with the tip ends of the disk guiding members **821**. As a force **F** is applied along the insertion direction, a large component force **f** exists in a direction to deflect the cantilevers. Therefore, the disk can be lightly inserted. Figure **39B** shows a state in which the small-size disk **302** has been inserted so that the guiding members have been pushed all the way apart. Figure **39C** shows a state in which the small-size disk **302** is inserted even deeper so that the small-size disk **302** has been accommodated in the retention position. Once the small-size disk **302** has been accommodated in the retention position, even if a force **F1** acts in a direction for taking out the small-size disk **302**, the force **f1** acting on the levers will act in a direction to compress the levers so that a very little component force exists in the deflecting direction. Accordingly, the cantilevers hardly deflect; if at all, the cantilevers will deflect in a direction tangent to the circumference of the small-size disk **302**, so that very minute deformation results along the radius direction of the small-size disk **302**. Thus, the positional accuracy of the small-size disk **302** is secured.

In the case of taking out the small-size disk **302**, the intersection **a2** between the extensions of the free ends of the disk guiding members in the form of cantilevers and the insertion central line of the insertion adapter for the small-size disk **302** is located slightly forward with respect to the center **a1** of the disk retention position along the insertion direction. Therefore, the small-size disk **302** can be taken out by applying a slightly greater force **F1**.

In other words, the disk guiding members **821** deflect so that the small-size disk **302** can be lightly inserted, whereas the deflection of the disk guiding members **821** provide repellent force when the small-size disk **302** is taken out. Thus, the small-size disk **302** can be put in or taken out with a good feel.

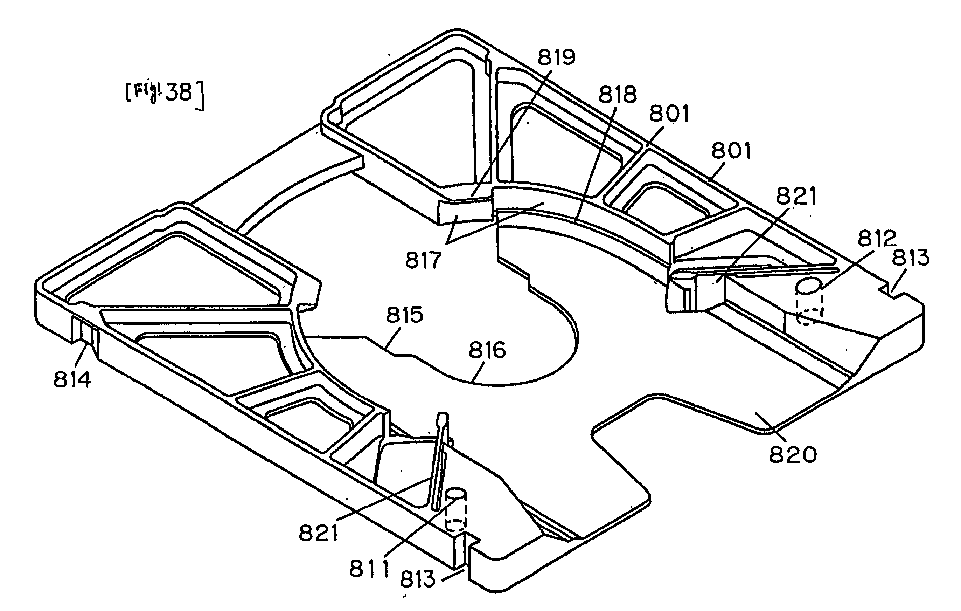

Figure **38** is a perspective view showing an adapter according to a second example of the present invention. In Figure **38**, **811** to **819** are the same as in the adapter of Figure **37**, and the descriptions thereof are omitted.

Reference numeral **820** denotes a disk insertion section for the small-size disk **302**, constituted by a plane that is parallel to the adapter plane, and provided at the trailing end on a central line along the direction in which the adapter body is inserted into the disk loading device. In this case, the small-size disk **302** is stored in parallel to the plane of the adapter **801**.

The adapter **801** has a cut-away structure in which rib structures are left. Various designs may be incorporated therein.

Figures **40A** to **C** show a manner in which the adapter **801** is used. Figure **40A** shows a state in which the holder **100** protrudes from the disk loading device body, ready for insertion of a medium. The adapter **801** is inserted in the same manner as the cartridge **300**.

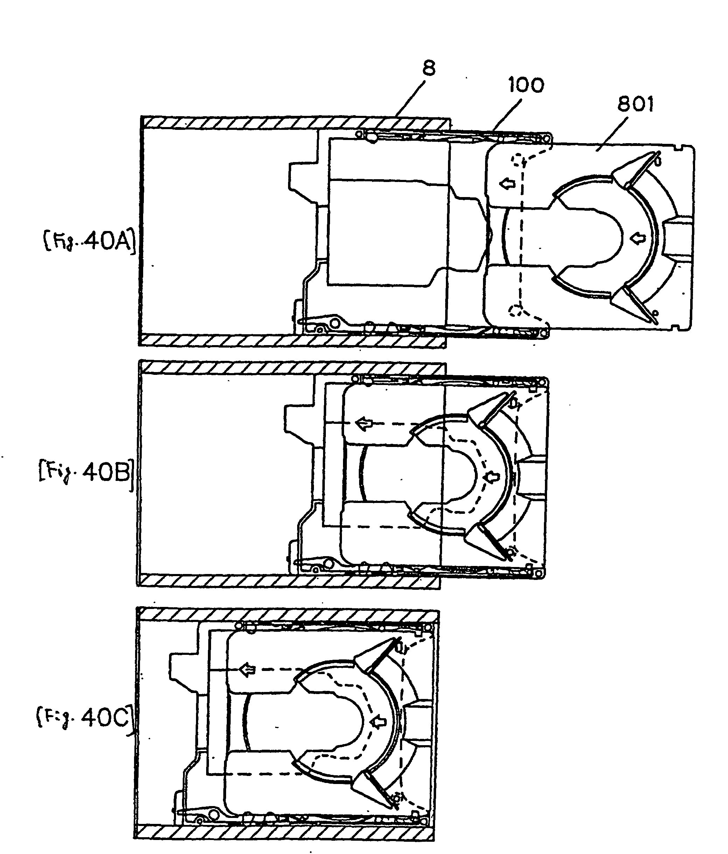

Figure **40B** shows a state in which the mounting of the adapter **801** into the holder **100** has been completed. In this state, the small-size disk **302** can be mounted into or detached from the adapter **801** in the same manner as in Figures **39A** to **C**.

Figure **40C** shows a state in which, after the insertion of the small-size disk **302** has been completed, the holder **100** is drawn into the device body, whereby the loading operation is completed.

### INDUSTRIAL APPLICABILITY

As described above, in accordance with the disk loading device of the present invention, the operation of opening a shutter is completed by a shutter opening/closing means which is provided at the rear end of a holder before a leading edge end of a cartridge passes over a clamp section. Therefore, the shutter is already in an open state when the leading edge end of the cartridge passes over the clamp section. As a result, a disk motor and the retreated position of a clamper can be located adjacent to each other, so that during a clamp operation, the amount of relative movement between the disk motor, the clamper, and the cartridge can be small. Since the entire thickness of the cartridge does not need to be retreated into the clamp section, a disk loading device in a thin configuration can be realized.

In one embodiment, a tip end of an arm from the holder for the cartridge does not interfere with a retention section of a rotation driving means. Therefore, the interspace between a turntable, which is the retention section of the rotation driving means, and the clamper can be reduced.

In one embodiment, the arm pivots as a result of a portion of the arm being caught by a guide of the holder and moving.

In one embodiment, a shutter opening operation is securely performed without requiring the arm to move to the final end of the travel path of the arm and without allowing the arm to be disengaged from the shutter of the cartridge.

In one embodiment, the cartridge is interposed between a pair of interposition members, and a bare disk is retained in slits in retention sections of the respective interposition members.

In one embodiment, a pair of inlet levers are pushed apart by the cartridge when the cartridge is inserted. As a result, the tip ends of the pair of disk holders are spread, thereby allowing the cartridge to pass between the tip ends of the disk holders.

In one embodiment, the state of the pair of interposition members changes when the cartridge is retained, the state being detected by a second detection means. Based on the detection outputs from first and second detection means, it is possible to determine whether a cartridge or a disk by itself has been inserted into the holder.

In accordance with an adapter for a disk according to the present invention, disks having different diameters can be used, and exchange of disks is possible while the adapter is mounted in the holder.

In accordance with a disk loading device of the present invention, a mechanism for locking the holder to a guide responsive to the insertion of a cartridge is constructed. During the insertion of a cartridge, the holder can be secured by preventing the holder from being pushed into the guide because of, for example, a load due to the operation of opening the shutter of the cartridge. Thus, it is possible to securely mount the cartridge in the holder.

In one embodiment, the holder includes a pair of interposition members for interposing the cartridge at opposite sides thereof, and the locking member is provided on the pair of interposition members.

In accordance with a disk loading device of the present invention, a mechanism for locking the holder to a guide responsive to the insertion of a cartridge is constructed. During the insertion of a cartridge, the holder can be secured by preventing the holder from being pushed into the guide because of, for example, a load due to the operation of opening the shutter of the cartridge. Thus, it is possible to securely mount the cartridge in the holder. Furthermore, when the cartridge is mounted in the holder, the locking member is snugly received by a recessed section of the cartridge, so that it is possible to accurately position the cartridge within the holder. At the same time, since the locking member is disengaged from the guide, it is possible to securely load the cartridge, along with the holder, after the cartridge is accurately positioned within the holder.

In one embodiment, the holder includes a pair of interposition members for interposing the cartridge at opposite sides thereof, and the locking member is provided on the pair of interposition members.

In accordance with a disk loading device of the present invention, a forced ejection function for forcing the cartridge to be ejected is realized. In a normal operation which does not utilize the forced ejection function, an elastic member is not caught by the cartridge. When the forced ejection function is utilized, the elastic member is deformed by the operation section, so that the deformed elastic member is caught by the cartridge. The cartridge which is caught by the elastic member is ejected from the holder owing to the elastic force of the elastic member restoring its original shape.

In accordance with the aforementioned constitution, a disk loading device can be realized in a thin configuration.

In accordance with a disk loading device of the present invention, at least a portion of a mechanism for activating the retention section of the rotation driving section is disposed in a range overlapping with an opening of the cartridge. The thickness of the opening of the cartridge is thinner than the entire thickness of the cartridge. As a result, by disposing at least a portion of the retention section of the rotation driving section in the opening of the cartridge, the retention section can be located closer to the disk. As a result, a disk loading device can be realized in a thin configuration.

## Claims

1. A disk loading device comprising:
a holder (100) for detachably retaining a cartridge (300);
transfer means (111, 112, 113) for moving the holder (100) in or out through an opening at a front of a drive apparatus;
a guide for movably supporting the holder (100);
a retention section (102) for retaining a disk in the vicinity of a centre thereof, the disk being within the cartridge (300) having been transferred to a predetermined position by the transfer means (111, 112, 113);
rotation means (2) for rotating the disk retained by the retention section (102); and
shutter opening/closing means (103) in the holder (100), having an arm (103c) which is rotatably supported and energised toward an inlet sid by an elastic element (160), the arm having a tip end (103b) which abuts with the cartridge (300) and another end having a short projection (103d),
**characterised in that** the disk loading device further comprises
a notch (8e) provided in the guide for engaging with the short projection on the arm when the holder (100) has moved out to a cartridge insertion position located at a most proximal end; and
wherein, when the cartridge (300) is inserted into the holder (100), the tip end (103b) of the arm (103c) abuts with a shutter (300a) of the cartridge (300) so as to open the shutter (300a), the cartridge (300) thereafter being drawn in by the transfer means, and
wherein, when the holder (100) is drawn in by the transfer means (111, 112, 113) without the cartridge (300) being inserted, the short projection (103d) on the other end of the arm is pushed by a side face of the guide so as to go out of the notch (8e) in the guide, causing the arm to be pivoted so that the tip end (103b) of the arm moves in a manner to avoid the retention section (102) of the rotation means (2).

2. A disk loading device according to claim 1,
wherein the holder (100) includes a pair of interposition members (104, 107) for interposing the cartridge (300) at opposite sides thereof; and
wherein the pair of interposition members (104, 107) includes an inlet section (107) which is wider than a width of the cartridge (300), and a retention section (104) for interposing the cartridge (300) at the opposite sides thereof, the cartridge (300) having been inserted through the inlet section (107),
wherein at least the retention section (104) includes slits (104a) into which opposite ends of the disk by itself are respectively inserted.

3. A disk loading device according to claim 2, wherein the pair of interposition members (104, 107) comprise a pair of inlet levers (107) and a pair of disk holders (104),
wherein tip ends of the pair of inlet levers (107) are wider than a width of the cartridge (300);
wherein rear ends of the pair of inlet levers (107) and tip ends of the pair of disk holders (104) are mutually supported so as to elastically retain the respective disk holders (104); and
wherein at least the pair of disk holders (104) includes slits (104a) into which opposite ends of the disk by itself are respectively inserted.

4. A disk loading device according to claim 2, comprising:
first detection means (18) for detecting insertion of either the cartridge (300) or the disk itself by itself into the holder (100); and
second detection means (108b, 115) for detecting a state of the pair of interposing members (104, 107).

5. An adapter (801) for detachably retaining a disk by itself (302) for use in a disk loading device according to claim 1, the adapter (801) comprising:
a recessed section for snugly receiving the disk (302):
an introduction section (820) for introducing the disk into the recessed section; and
an elastic section (821) provided between the recessed section and the introduction section (820), the elastic section (821) moving by being pushed by a rim of the disk (302) toward the outside of the recessed section when the disk (302) is introduced from the introduction section (820) to the recessed section, and the elastic section (821) returning to a vicinity of the rim of the disk (302) when the disk (302) has been snugly received by the recessed section,
wherein an opening is provided for allowing a central portion of the disk (302) having been snugly received by the recessed section to be externally retained and for externally performing recording or reproduction to the disk (302).

6. A disk loading device according to claim 1,
wherein the holder (100) comprises: an inlet lever (107) axially supported in the vicinity of an inlet of a passage for the holder (100) through which the cartridge (300) is inserted; a locking member (109) disposed in the vicinity of a final end of the passage for the holder (100); and a junction plate (108) for connecting the inlet lever (107) and the locking member (109),
wherein the inlet lever (107) is energized toward the holder (100) passage through which the cartridge (300) is inserted so that the inlet lever (107) is pushed outside of the passage, and pivots by the cartridge (300) which has been inserted into the passage,
wherein the junction plate (108) moves outside of the passage together with the locking member (109) concurrently as the inlet lever (107) pivots, and
wherein the locking member (109) has a hook section (109a) and an abutting section 8109b), such that the hook section (109a) is caught by the guide concurrently as the locking member (109) moves outside of the passage, so that the holder (100) is anchored by the guide; and the hook section (109a) is disengaged from the guide concurrently as the abutment section (109b) is pushed away by the cartridge (300) which has been further inserted up to the vicinity of the final end of the passage, thereby prohibiting the movement of the holder (100) during an operation of inserting the cartridge (300) into the passage.

7. A disk loading device according to claim 1 further comprising:
an elastic member (15) provided in the vicinity of the holder (100); and
an operation section (14, 24) for deforming the elastic member (15) so that the deformed elastic member (15) is caught by the holder (100),
wherein the holder (100) caught by the elastic member (15) is ejected owing to elastic force of the elastic member (15) restoring its original shape.

8. A disk loading device according to claim 1, further comprising:
rotation driving means (2a) having a retention section for retaining a disk in the vicinity of a centre thereof, the disk being within the cartridge (300) whose shutter (300a) is opening, wherein the rotation driving means (2a) rotates the disk retained by the retention section,
wherein, at least a portion of a mechanism for activating the retention section of the rotation driving means (2a) is disposed in a range overlapping with an opening of the cartridge (300) previously closed by the shutter (300a).

## Revendications

1. Dispositif de chargement de disque comprenant :
un chargeur (100) destiné à retenir de façon amovible une cartouche (300),
un moyen de transfert (111, 112, 113) destiné à entrer ou sortir le chargeur (100) au travers d'une ouverture sur l'avant d'un appareil de lecteur,
un guide destiné à supporter de façon mobile le chargeur (100),
une section de rétention (102) destiné à retenir un disque au voisinage d'un centre de celle-ci, le disque qui est à l'intérieur de la cartouche (300) ayant été transféré à une position prédéterminée par le moyen de transfert (111, 112, 113),
un moyen de rotation (2) destiné à faire tourner le disque retenu par la section de rétention (102), et
un moyen d'ouverture/fermeture d'obturateur (103) dans le chargeur (100), comportant un bras (103c) qui est supporté avec possibilité de rotation et sollicité vers le côté de l'orifice d'entrée par un élément élastique (160), le bras comportant une extrémité de pointe (103b) qui bute sur la cartouche (300) et une autre extrémité comportant une courte protubérance (103d),
**caractérisé en ce que** le dispositif de chargement de disque comprend en outre
une encoche (8e) ménagée dans le guide en vue de recevoir la courte protubérance sur le bras lorsque le chargeur (100) est sorti d'une position d'insertion de cartouche située à une extrémité la plus proximale, et
dans lequel, lorsque la cartouche (300) est insérée dans le chargeur (100), l'extrémité de pointe (103b) du bras (103c) bute sur un obturateur (300a) de la cartouche (300) de façon à ouvrir l'obturateur (300a), la cartouche (300) étant après cela tirée à l'intérieur par le moyen de transfert, et
dans lequel, lorsque le chargeur (100) est tiré à l'intérieur par le moyen de transfert (111, 112, 113) sans que la cartouche (300) soit insérée, la courte protubérance (103d) sur l'autre extrémité du bras est poussée par une face latérale du guide de façon à sortir de l'encoche (8e) dans le guide, en amenant le bras à pivoter de manière à ce que l'extrémité de pointe (103b) du bras se déplace d'une manière qui évite la section de rétention (102) du moyen de rotation (2).

2. Dispositif de chargement de disque selon la revendication 1,
dans lequel le chargeur (100) comprend une paire d'éléments d'interposition (104, 107) destinée à intercaler la cartouche (300) au niveau des côtés opposés de celui-ci, et
dans lequel la paire d'éléments d'interposition (104, 107) comprend une section d'orifice d'entrée (107) qui est plus large que la largeur de la cartouche (300), et une section de rétention (104) destinée à intercaler la cartouche (300) au niveau des côtés opposés de celui-ci, la cartouche (300) ayant été insérée au travers de la section d'orifice d'entrée (107),
dans lequel au moins la section de rétention (104) comprend des fentes (104a) dans lesquelles des extrémités opposées du disque lui-même sont respectivement insérées.

3. Dispositif de chargement de disque selon la revendication 2, dans lequel la paire d'éléments d'interposition (104, 107) comprend une paire de leviers d'orifice d'entrée (107) et une paire de supports de disque (104),
dans lequel les extrémités de pointe de la paire de leviers d'orifice d'entrée (107) sont plus larges que la largeur de la cartouche (300),
dans lequel les extrémités arrière de la paire de leviers d'orifice d'entrée (107) et les extrémités de pointe de la paire de supports de disque (104) sont mutuellement supportées de façon à retenir élastiquement les supports de disque respectifs (104), et
dans lequel au moins la paire de supports de disque (104) comprend des fentes (104a) dans lesquelles les extrémités opposées du disque lui-même sont respectivement insérées.

4. Dispositif de chargement de disque selon la revendication 2, comprenant :
un premier moyen de détection (18) destiné à détecter une insertion soit de la cartouche (300), soit du disque lui-même de lui-même dans le chargeur (100), et
un second moyen de détection (108b, 115) destiné à détecter un état de la paire d'éléments d'interposition (104, 107).

5. Adaptateur (801) destiné à retenir de façon amovible un disque lui-même (302) en vue d'une utilisation dans un dispositif de chargement de disque selon la revendication 1, l'adaptateur (801) comprenant :
une section en retrait destinée à recevoir de façon serrée le disque (302),
une section d'introduction (820) destinée à introduire le disque dans la section en retrait, et
une section élastique (821) prévue entre la section en retrait et la section d'introduction (820), la section élastique (821) se déplaçant en étant poussée par un rebord du disque (302) vers l'extérieur de la section en retrait lorsque le disque (302) est introduit depuis la section d'introduction (820) vers la section en retrait, et la section élastique (821) revenant au voisinage du rebord du disque (302) lorsque le disque (302) a été reçu de façon serrée par la section en retrait,
où une ouverture est ménagée pour permettre à une partie centrale du disque (302) qui a été reçue de façon serrée par la section en retrait d'être retenue de l'extérieur et destinée à exécuter de l'extérieur l'enregistrement ou la reproduction du disque (302).

6. Dispositif de chargement de disque selon la revendication 1,
dans lequel le chargeur (100) comprend : un levier d'orifice d'entrée (107) supporté de façon axiale au voisinage d'un orifice d'entrée d'un passage destiné au chargeur (100) au travers duquel la cartouche (300) est insérée, un élément de verrouillage (109) disposé au voisinage d'une extrémité finale du passage destiné au chargeur (100), et une plaque de jonction (108) destinée à relier le levier d'orifice d'entrée (107) et l'élément de verrouillage (109),
dans lequel le levier d'orifice d'entrée (107) est sollicité vers le passage du chargeur (100) au travers duquel la cartouche (300) est insérée de sorte que le levier d'orifice d'entrée (107) est poussé à l'extérieur du passage, et pivote grâce à la cartouche (300) qui a été insérée dans le passage,
où la plaque de jonction (108) se déplace à l'extérieur du passage en même temps que l'élément de verrouillage (109) simultanément au pivotement du levier d'orifice d'entrée (107), et
où l'élément de verrouillage (109) comporte une section de crochet (109a) et une section de butée (109b), de sorte que la section de crochet (109a) est saisie par le guide simultanément au déplacement de l'élément de verrouillage (109) à l'extérieur du passage, de sorte que le chargeur (100) est ancré par le guide, et la section de crochet (109a) est dégagée du guide simultanément lorsque la section de butée (109) est repoussée par la cartouche (300) qui a été davantage insérée jusqu'au voisinage de l'extrémité finale du passage, en interdisant ainsi le mouvement du chargeur (100) pendant une opération d'insertion de la cartouche (300) dans le passage.

7. Dispositif de chargement de disque selon la revendication 1, comprenant en outre :
un élément élastique (15) disposé au voisinage du chargeur (100), et
une section d'actionnement (14, 24) destinée à déformer l'élément élastique (15) de manière à ce que l'élément élastique déformé (15) soit en prise avec le chargeur (100),
dans lequel le chargeur (100) saisi par l'élément élastique (15) soit éjecté grâce à la force élastique de l'élément élastique (15) qui revient à sa forme d'origine.

8. Dispositif de chargement de disque selon la revendication 1, comprenant en outre :
un moyen d'entraînement en rotation (2a) comportant une section de rétention destinée à retenir un disque au voisinage d'un centre de celui-ci, le disque étant à l'intérieur de la cartouche (300) dont l'obturateur (300a) s'ouvre, où le moyen d'entraînement en rotation (2a) fait tourner le disque retenu par la section de rétention,
dans lequel, au moins une partie d'un mécanisme destiné à activer la section de rétention du moyen d'entraînement en rotation (2a) est disposée dans une plage en chevauchement avec une ouverture de la cartouche (300) précédemment refermée par l'obturateur (300a).

## Patentansprüche

1. Plattenladevorrichtung, mit:
einer Halterung (100) zum lösbaren Halten einer Kassette (300);
Umlademitteln (111, 112, 113), die die Halterung (100) durch eine Öffnung an einer Vorderseite einer Laufwerkvorrichtung hinein oder heraus bewegen;
einer Führung zum beweglichen Unterstützen der Halterung (100);
einem Halteabschnitt (102) zum Halten einer Platte in der Nähe ihres Zentrums, wobei die Platte, die sich in der Kassette (300) befindet, durch die Umlademittel (111, 112, 113) an eine vorgegebene Position umgeladen worden ist;
Drehmitteln (2) zum Drehen der durch den Halteabschnitt (102) gehaltenen Platte; und
Verschlussöffnungs-Nerschlussschließmitteln (103) in der Halterung (100), die einen Arm (103c) besitzen, der drehbar unterstützt und zu einer Einfassseite durch ein elastisches Element (106) vorbelastet ist, wobei der Arm ein spitzes Ende (103b) besitzt, das an der Kassette (300) anliegt, und ein weiteres Ende besitzt, das einen kurzen Vorsprung (103d) besitzt,
**dadurch gekennzeichnet, dass** die Plattenladevorrichtung ferner umfasst:
eine Nut (8e), die in der Führung vorgesehen ist, um mit dem kurzen Vorsprung am Arm in Eingriff zu gelangen, wenn sich die Halterung (100) aus der Kassetteneinschubposition, die sich am proximalen Ende befindet, bewegt hat; und
wobei das spitze Ende (103b) des Arms (103c) dann, wenn die Kassette (300) in die Halterung (100) eingeschoben ist, an einem Verschluss (300a) der Kassette (300) anliegt, um den Verschluss (300a) zu öffnen, wobei die Kassette (300) anschließend durch die Umlademittel hineingezogen wird, und
wobei der kurze Vorsprung (103d) am anderen Ende des Arms dann, wenn die Halterung (100) durch die Umlademittel (111, 112, 113) hineingezogen wird, ohne dass die Kassette (300) eingeschoben ist, durch eine Seitenfläche der Führung geschoben wird, um aus der Kerbe (8e) in der Führung zu gelangen, wodurch der Arm so geschwenkt wird, dass sich das spitze Ende (103b) des Arms in der Weise bewegt, dass der Halteabschnitt (102) der Drehmittel (2) umgangen wird.

2. Plattenladevorrichtung nach Anspruch 1,
bei der die Halterung (100) ein Paar Zwischenpositionierungselemente (104, 107) aufweist, zwischen denen die Kassette (300) mit ihren gegenüberliegenden Enden positioniert wird; und
bei der das Paar Zwischenpositionierungselemente (104, 107) einen Einlassabschnitt (107), der weiter als eine Breite der Kassette (300) ist, und einen Halteabschnitt (104), um die Kassette (300) an ihren gegenüberliegenden Seiten dazwischen zu positionieren, umfasst, wenn die Kassette (300) durch den Einlassabschnitt (107) eingeschoben worden ist,
wobei wenigstens der Halteabschnitt (104) Schlitze (104a) enthält, in die gegenüberliegende Enden der Platte von selbst eingeschoben werden.

3. Plattenladevorrichtung nach Anspruch 2, bei der das Paar Zwischenpositionierungselemente (104, 107) ein Paar Einlasshebel (107) und ein Paar Plattenhalterungen (104) umfasst,
wobei spitze Enden des Paars Einlasshebel (107) weiter als eine Breite der Kassette (300) sind;
wobei hintere Enden des Einlasshebelpaars (107) und spitze Enden des Plattenhalterungspaars (104) gegenseitig unterstützt sind, um die jeweiligen Plattenhalterungen (104) elastisch zu halten; und
wobei wenigstens das Plattenhalterungspaar (104) Schlitze (104a) aufweist, in die gegenüberliegende Enden der Platte von selbst eingeschoben werden.

4. Plattenladevorrichtung nach Anspruch 2, mit:
ersten Erfassungsmitteln (18), die das Einschieben entweder der Kassette (300) oder der Platte selbst von selbst in die Halterung (100) erfassen; und
zweiten Erfassungsmitteln (108b, 115), die einen Zustands des Paars Zwischenpositionierungselemente (104, 107) erfassen.

5. Adapter (801) zum lösbaren Halten einer Platte (302) von selbst für eine Verwendung in einer Plattenladevorrichtung nach Anspruch 1, wobei der Adapter (801) umfasst:
einen ausgesparten Abschnitt zum passgenauen Aufnehmen der Platte (302);
einen Einführungsabschnitt (820) zum Einführen der Platte in den ausgesparten Abschnitt; und
einen elastischen Abschnitt (821), der zwischen dem ausgesparten Abschnitt und dem Einführungsabschnitt (820) vorgesehen ist, und sich dadurch bewegt, dass er durch einen Rand der Scheibe (302) zur Außenseite des ausgesparten Abschnitts geschoben wird, wenn die Platte (302) von dem Einführungsabschnitt (820) in den ausgesparten Abschnitt eingeführt wird, und in die Umgebung des Randes der Platte (302) zurückkehrt, wenn die Platte (302) durch den ausgesparten Abschnitt eng aufgenommen worden ist,
wobei eine Öffnung vorgesehen ist, um zu ermöglichen, dass ein Mittelabschnitt (302), der von dem ausgesparten Abschnitt eng aufgenommen worden ist, von außen gehalten wird und dass eine Aufzeichnung oder Wiedergabe auf die bzw. von der Platte (302) von außen ausgeführt wird.

6. Plattenladevorrichtung nach Anspruch 1, bei der
die Halterung (100) umfasst: einen Einlasshebel (107), der in der Nähe eines Einlasses eines Durchlasses für die Halterung (100), durch den die Kassette (300) eingeschoben wird, axial unterstützt ist; ein Verriegelungselement (109), das in der Nähe des hinteren Endes des Durchlasses für die Halterung (100) angeordnet ist; und eine Verbindungsplatte (108), die den Einlasshebel (107) mit dem Verriegelungselement (109) verbindet,
der Einlasshebel (107) zu dem Durchlass der Halterung (100), durch die die Kassette (300) eingeschoben wird, vorbelastet ist, so dass der Einlasshebel (107) aus dem Durchlass geschoben wird und durch die Kassette (300), die in den Durchlass eingeschoben worden ist, geschwenkt wird,
die Verbindungsplatte (108) sich zusammen mit dem Verriegelungselement (109) gleichzeitig mit einem Schwenken des Einlasshebels (107) aus dem Durchlass bewegt, und
das Verriegelungselement (109) einen Hakenabschnitt (109a) und einen Anschlagabschnitt (109b) umfasst, derart, dass der Hakenabschnitt (109a) gleichzeitig mit einer Bewegung des Verriegelungselements (109) aus dem Durchlass durch die Führung eingefangen wird, so dass die Halterung (100) durch die Führung verankert ist; und der Hakenabschnitt (109a) aus einem Eingriff mit der Führung gleichzeitig mit einem Wegschieben des Anschlagabschnitts (109b) durch die Kassette (300), die weiter bis in die Nähe des hinteren Endes des Durchlasses eingeschoben worden ist, gelöst wird, wodurch die Bewegung der Halterung (100) während des Vorgangs des Einschiebens der Kassette (300) in den Durchlass verhindert wird.

7. Plattenladevorrichtung nach Anspruch 1, femer mit:
einem elastischen Element (15), das in der Nähe der Halterung (100) vorgesehen ist; und
einem Arbeitsabschnitt (14, 24) zum Verformen des elastischen Elements (15), so dass das verformte elastische Element (15) durch die Halterung (100) eingefangen wird,
wobei die Halterung (100), die durch das elastische Element (15) eingefangen ist, aufgrund der elastischen Kraft des elastischen Elements (15), das wieder seine ursprüngliche Form annimmt, ausgestoßen wird.

8. Plattenladevorrichtung nach Anspruch 1, femer mit:
Drehantriebsmitteln (2a) mit einem Halteabschnitt zum Halten einer Platte in der Nähe ihres Zentrums, wobei sich die Platte in der Kassette (300) befindet, deren Verschluss (300a) geöffnet ist, wobei die Drehantriebsmittel (2a) die von dem Halteabschnitt gehaltene Platte drehen,
wobei wenigstens ein Abschnitt eines Mechanismus zum Aktivieren des Halteabschnitts der Drehantriebsmittel (2a) in einem Bereich angeordnet ist, der mit einer Öffnung der Kassette (300), die vorher durch den Verschluss (300a) geschlossen worden ist, überlappt.
